# EUROPEAN PATENT APPLICATION

(11) **EP 4 808 071 A1**
(43) Date of publication of application: **16.09.2026**
(21) Application number: 24890427.8
(22) Date of filing: 17.10.2024
(51) Int. Cl.: H04L 45/243

(54) **COMMUNICATION METHOD AND APPARATUS**

(30) Priority: 15.11.2023 CN 202311526138
(71) Applicant: Huawei Technologies Co., Ltd., Shenzhen, Guangdong 518129 (CN)
(72) Inventor: XU, Cong, Shenzhen, Guangdong 518129 (CN); LI, Fuliang, Shenyang, Liaoning 110819 (CN)
(74) Representative: Gill Jennings & Every LLP
(86) International application number: PCT/CN2024/125525
(87) International publication number: WO 2025/103069

(57) **Abstract**

This application provides a communication method and apparatus, and relates to the communication field. The method includes: A first host detects transmission performance of a first transmission path between the first host and a second host. When the transmission performance of the first transmission path meets a preset condition, the first host sends service data through the first transmission path and a second transmission path, where the first transmission path and the second transmission path are transmission paths that are between the first host and the second host and that are in networks of different standards. Alternatively, when the transmission performance of the first transmission path does not meet a preset condition, the first host sends service data through the first transmission path. The method is used to reduce traffic costs and power consumption overheads of hosts caused by transmitting the service data between the hosts.

## Description

This application claims priority to Chinese Patent Application No. 202311526138.0, filed with the China National Intellectual Property Administration on November 15, 2023 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

Currently, with development of wireless communication technologies, more electronic devices start to transmit data by using a multipath transmission technology, to improve data transmission performance of the electronic devices. Mainstream multipath transmission technologies include a multipath transmission control protocol (multipath transmission control protocol, MPTCP) and the like.

In the multipath transmission technology, a host may transmit data through transmission paths of a plurality of accessed networks of different standards. For example, when service data is transmitted between a terminal device and a service server, the electronic device may send the service data to the service server through a transmission path of a cellular network and a transmission path of a wireless fidelity (wireless fidelity, Wi-Fi) network. Alternatively, when sending the service data to the electronic device, the service server may send the service data to the electronic device through the transmission path of the cellular network and the transmission path of the Wi-Fi network. This can enhance data transmission efficiency.

However, in comparison with data transmission performed through a single path, data transmission performed by using the multipath transmission technology causes additional traffic costs and increases power consumption overheads.

### SUMMARY

This application provides a communication method and apparatus, to reduce traffic costs and power consumption overheads of hosts caused by transmitting service data between the hosts.

According to a first aspect, a communication method is provided. The method includes: A first host detects transmission performance of a first transmission path between the first host and a second host. When the transmission performance of the first transmission path meets a preset condition, the first host sends service data through the first transmission path and a second transmission path, where the first transmission path and the second transmission path are transmission paths that are between the first host and the second host and that are in networks of different standards. Alternatively, when the transmission performance of the first transmission path does not meet a preset condition, the first host sends service data through the first transmission path.

In the foregoing method in this application, when the transmission performance of the first transmission path meets the preset condition, the service data is sent through the first transmission path and the second transmission path in a multipath transmission manner; and when the transmission performance of the first transmission path does not meet the preset condition, the service data may be sent through the first transmission path in a single-path transmission manner. In other words, the multipath transmission manner is not used in this case. In this way, according to the foregoing method in this embodiment of this application, the multipath transmission manner or the single-path transmission manner can be selected for data transmission based on an actual requirement. This avoids a problem of high traffic costs and power consumption overheads caused by blindly using the multipath transmission manner for data transmission.

In an implementation, the transmission performance of the first transmission path includes one or more of a transmission delay, a packet loss rate, and a received signal strength indicator RSSI that are of the first transmission path.

In the foregoing implementation, when one or more of the transmission delay, the packet loss rate, and the RSSI that are of the first transmission path do not meet the preset condition, the service data is sent in the single-path transmission manner. When one or more of the transmission delay, the packet loss rate, and the RSSI that are of the first transmission path meet the preset condition, the service data is sent in the multipath transmission manner, thereby avoiding a problem of high traffic costs and power consumption overheads caused by blindly using the multipath transmission manner for data transmission.

In an implementation, the preset condition includes one or more of the following: The transmission delay of the first transmission path is greater than a first delay threshold, a difference between the transmission delay of the first transmission path and a minimum transmission delay of the first transmission path within a preset time period is greater than a second delay threshold, or the transmission delay of the first transmission path tends to deteriorate.

In the foregoing implementation, one or more of the following are used as the preset condition: The transmission delay of the first transmission path is greater than the first delay threshold, the difference between the transmission delay of the first transmission path and the minimum transmission delay of the first transmission path within the preset time period is greater than the second delay threshold, or the transmission delay of the first transmission path tends to deteriorate, so that when the transmission delay of the first transmission path is large or tends to deteriorate, the service data may be sent through the first transmission path and the second transmission path, to ensure smooth transmission of the service data.

In an implementation, that the transmission delay of the first transmission path tends to deteriorate includes: A change gradient of the transmission delay of the first transmission path in n consecutive detection periods is a positive gradient, where n is a positive integer; and/or that the transmission delay of the first transmission path tends to deteriorate includes: The change gradient of the transmission delay of the first transmission path in the n consecutive detection periods is the positive gradient, and the change gradient of the transmission delay of the first transmission path in the n consecutive detection periods is greater than a gradient threshold.

In the foregoing implementation, whether the transmission delay of the first transmission path tends to deteriorate can be accurately determined, and when the transmission delay tends to deteriorate, the service data is sent in time through the first transmission path and the second transmission path, to ensure smooth transmission of the service data.

In an implementation, the preset condition includes one or more of the following: The RSSI of the first transmission path is greater than a first signal strength threshold, a difference between the RSSI of the first transmission path and a minimum RSSI of the first transmission path within a preset time period is greater than a second signal strength threshold, or the RSSI of the first transmission path tends to deteriorate.

In the foregoing implementation, one or more of the following are used as the preset condition: The RSSI of the first transmission path is greater than the first signal strength threshold, the difference between the RSSI of the first transmission path and the minimum RSSI of the first transmission path within the preset time period is greater than the second signal strength threshold, or the RSSI of the first transmission path tends to deteriorate, so that when the RSSI of the first transmission path is low or tends to deteriorate, the service data may be sent through the first transmission path and the second transmission path, to ensure smooth transmission of the service data.

In an implementation, that the RSSI of the first transmission path tends to deteriorate includes: A change gradient of the RSSI of the first transmission path in k consecutive detection periods is a positive gradient, where k is a positive integer; and/or that the RSSI of the first transmission path tends to deteriorate includes: The change gradient of the RSSI of the first transmission path in the k consecutive detection periods is the positive gradient, and the change gradient of the RSSI of the first transmission path in the k consecutive detection periods is greater than a gradient threshold.

In the foregoing implementation, whether the RSSI of the first transmission path tends to deteriorate can be accurately determined, and when the RSSI tends to deteriorate, the service data is sent in time through the first transmission path and the second transmission path, to ensure smooth transmission of the service data.

In an implementation, the preset condition includes: The packet loss rate of the first transmission path is greater than a packet loss rate threshold.

In the foregoing implementation, that the packet loss rate of the first transmission path is greater than the packet loss rate threshold is used as the preset condition, so that when the packet loss rate of the first transmission path is high, the service data can be sent through the first transmission path and the second transmission path, to ensure smooth transmission of the service data.

In an implementation, that the first host sends the service data through the first transmission path and the second transmission path includes: The first host sends, in a sequence of data packets in the service data, the data packets in the service data through the first transmission path; and the first host determines, based on a transmission delay difference between the first transmission path and the second transmission path, a data packet sent through the second transmission path.

In the foregoing implementation, the first host may send, in the sequence of the data packets in the service data, the data packets in the service data through the first transmission path. In addition, when sending the service data through the second transmission path, the first host may determine, based on the transmission delay difference between the first transmission path and the second transmission path, the data packet sent through the second transmission path, and then send the data packet through the second transmission path. In this way, a possibility that redundant data is invalidly transmitted due to a transmission delay difference between the two transmission paths can be reduced.

In an implementation, that the first host determines, based on the transmission delay difference between the first transmission path and the second transmission path, the data packet sent through the second transmission path includes: When determining, based on the transmission delay difference between the first transmission path and the second transmission path, that the transmission delay of the first transmission path is less than a transmission delay of the second transmission path, the first host calculates a quantity m of data packets sent through the first transmission path within a time period corresponding to the transmission delay difference; and the first host determines, based on the quantity m of data packets and a first data packet currently sent through the first transmission path, a second data packet sent through the second transmission path, where the second data packet is a data packet after m data packets of the first data packet.

In the foregoing implementation, time at which the second host receives the second data packet through the first transmission path is close to time at which the second host receives the second data packet through the second transmission path, thereby reducing a possibility that redundant data is invalidly transmitted due to a transmission delay difference between the two transmission paths.

In an implementation, that the first host determines, based on the transmission delay difference between the first transmission path and the second transmission path, the data packet sent through the second transmission path includes: When determining, based on the transmission delay difference between the first transmission path and the second transmission path, that the transmission delay of the first transmission path is less than the transmission delay of the second transmission path, the first host calculates the quantity m of data packets sent through the first transmission path within the time period corresponding to the transmission delay difference; and when the quantity m of data packets does not exceed a first threshold, the first host determines that the second data packet sent through the second transmission path is the same as the first data packet currently sent through the first transmission path.

In the foregoing implementation, when the transmission delay difference between the two transmission paths is small, even if there is an interval between time at which a same data packet arrives at the second host through the two transmission paths, rate reduction transmission in a congestion control solution is not triggered. In this case, the first host may send a same data packet through the first transmission path and the second transmission path at the same time. In this way, an operation amount performed by the first host can be reduced, and transmission efficiency can be improved.

In an implementation, that the first host determines, based on the transmission delay difference between the first transmission path and the second transmission path, the data packet sent through the second transmission path includes: When determining, based on the transmission delay difference between the first transmission path and the second transmission path, that the transmission delay of the first transmission path is less than the transmission delay of the second transmission path, the first host calculates the quantity m of data packets sent through the first transmission path within the time period corresponding to the transmission delay difference; and when the quantity m of data packets is greater than a second threshold, the first host determines that the data packet sent through the second transmission path is a last data packet in a buffer of the first host.

In the foregoing implementation, when a quantity of data packets buffered in the first host is limited and a difference between the transmission delay of the second transmission path and the transmission delay of the first transmission path is large, the last data packet in the buffer may be sent through the second transmission path. In this way, a possibility that redundant data is invalidly transmitted is avoided as much as possible.

In an implementation, the method further includes: The first host determines, according to a first preset policy, a first network corresponding to the first transmission path from a plurality of networks accessed by the first host. The first preset policy includes: determining, based on network quality and/or network types of the plurality of networks accessed by the first host, the first network corresponding to the first transmission path.

In the foregoing implementation, a primary path (namely, the first transmission path) that is more suitable for transmitting the service data may be determined, thereby improving transmission efficiency of the service data.

In an implementation, the first preset policy specifically includes: when it is determined, based on the network types of the plurality of networks accessed by the first host, that the plurality of networks accessed by the first host include a wireless fidelity Wi-Fi network and a cellular network, determining that the Wi-Fi network is the first network corresponding to the first transmission path.

In the foregoing implementation, compared with the cellular network, the Wi-Fi network usually has a more stable signal and a lower user tariff. Therefore, a transmission path in the Wi-Fi network is preferentially used as the primary path (that is, the first transmission path) for transmission of the service data, to improve data transmission performance and reduce user costs.

In an implementation, the method further includes: The first host determines, according to a second preset policy, a second network corresponding to the second transmission path from the plurality of networks accessed by the first host. The second preset policy includes: determining, based on the network quality and/or the network types of the plurality of networks accessed by the first host, the second network corresponding to the second transmission path from a network other than the first network.

In the foregoing implementation, a secondary path (namely, the second transmission path) that is more suitable for transmitting the service data may be determined, thereby improving transmission efficiency of the service data.

According to a second aspect, a communication method is provided. The method includes: A first host sends, in a sequence of data packets in service data, the data packets in the service data through a first transmission path; and the first host determines, based on a transmission delay difference between the first transmission path and a second transmission path, a data packet sent through the second transmission path. The first transmission path and the second transmission path are transmission paths that are between the first host and a second host and that are in networks of different standards.

In the foregoing method, the first host may send, in the sequence of the data packets in the service data, the data packets in the service data through the first transmission path. In addition, when sending the service data through the second transmission path, the first host may determine, based on the transmission delay difference between the first transmission path and the second transmission path, the data packet sent through the second transmission path, and then send the data packet through the second transmission path. In this way, a possibility that redundant data is invalidly transmitted due to the transmission delay difference between the two transmission paths can be reduced.

In an implementation, that the first host determines, based on the transmission delay difference between the first transmission path and the second transmission path, the data packet sent through the second transmission path includes: When determining, based on the transmission delay difference between the first transmission path and the second transmission path, that a transmission delay of the first transmission path is less than a transmission delay of the second transmission path, the first host calculates a quantity m of data packets sent through the first transmission path within a time period corresponding to the transmission delay difference; and the first host determines, based on the quantity m of data packets and a first data packet currently sent through the first transmission path, a second data packet sent through the second transmission path, where the second data packet is a data packet after m data packets of the first data packet.

In the foregoing implementation, time at which the second host receives the second data packet through the first transmission path is close to time at which the second host receives the second data packet through the second transmission path, thereby reducing a possibility that redundant data is invalidly transmitted due to the transmission delay difference between the two transmission paths.

In an implementation, that the first host determines, based on the transmission delay difference between the first transmission path and the second transmission path, the data packet sent through the second transmission path includes: When determining, based on the transmission delay difference between the first transmission path and the second transmission path, that the transmission delay of the first transmission path is less than the transmission delay of the second transmission path, the first host calculates the quantity m of data packets sent through the first transmission path within the time period corresponding to the transmission delay difference; and when the quantity m of data packets does not exceed a first threshold, the first host determines that a second data packet sent through the second transmission path is the same as the first data packet currently sent through the first transmission path.

In the foregoing implementation, when the transmission delay difference between the two transmission paths is small, even if there is an interval between time at which a same data packet arrives at the second host through the two transmission paths, rate reduction transmission in a congestion control solution is not triggered. In this case, the first host may send a same data packet through the first transmission path and the second transmission path at the same time. In this way, an operation amount performed by the first host can be reduced, and transmission efficiency can be improved.

In an implementation, that the first host determines, based on the transmission delay difference between the first transmission path and the second transmission path, the data packet sent through the second transmission path includes: When determining, based on the transmission delay difference between the first transmission path and the second transmission path, that the transmission delay of the first transmission path is less than the transmission delay of the second transmission path, the first host calculates the quantity m of data packets sent through the first transmission path within the time period corresponding to the transmission delay difference; and when the quantity m of data packets is greater than a second threshold, the first host determines that the data packet sent through the second transmission path is a last data packet in a buffer of the first host.

In the foregoing implementation, when a quantity of data packets buffered in the first host is limited and a difference between the transmission delay of the second transmission path and the transmission delay of the first transmission path is large, the last data packet in the buffer may be sent through the second transmission path. In this way, a possibility that redundant data is invalidly transmitted is avoided as much as possible.

According to a third aspect, a communication apparatus is provided. The communication apparatus is used in a first host, and the communication apparatus includes a detection unit and a communication unit. The detection unit is configured to detect transmission performance of a first transmission path between a first host and a second host. When the transmission performance of the first transmission path meets a preset condition, the communication unit is configured to send service data through the first transmission path and a second transmission path, where the first transmission path and the second transmission path are transmission paths that are between the first host and the second host and that are in networks of different standards. Alternatively, when the transmission performance of the first transmission path does not meet a preset condition, the communication unit is configured to send service data through the first transmission path.

In an implementation, the transmission performance of the first transmission path includes one or more of a transmission delay, a packet loss rate, and a received signal strength indicator RSSI that are of the first transmission path.

In an implementation, the preset condition includes one or more of the following: The transmission delay of the first transmission path is greater than a first delay threshold, a difference between the transmission delay of the first transmission path and a minimum transmission delay of the first transmission path within a preset time period is greater than a second delay threshold, or the transmission delay of the first transmission path tends to deteriorate.

In an implementation, that the transmission delay of the first transmission path tends to deteriorate includes: A change gradient of the transmission delay of the first transmission path in n consecutive detection periods is a positive gradient, where n is a positive integer; and/or that the transmission delay of the first transmission path tends to deteriorate includes: The change gradient of the transmission delay of the first transmission path in the n consecutive detection periods is the positive gradient, and the change gradient of the transmission delay of the first transmission path in the n consecutive detection periods is greater than a gradient threshold.

In an implementation, that transmission performance of the first transmission path meets the preset condition includes one or more of the following: The RSSI of the first transmission path is greater than a first signal strength threshold, a difference between the RSSI of the first transmission path and a minimum RSSI of the first transmission path within a preset time period is greater than a second signal strength threshold, or the RSSI of the first transmission path tends to deteriorate.

In an implementation, that the RSSI of the first transmission path tends to deteriorate includes: A change gradient of the RSSI of the first transmission path in k consecutive detection periods is a positive gradient, where k is a positive integer; and/or that the RSSI of the first transmission path tends to deteriorate includes: The change gradient of the RSSI of the first transmission path in the k consecutive detection periods is the positive gradient, and the change gradient of the RSSI of the first transmission path in the k consecutive detection periods is greater than a gradient threshold.

In an implementation, that the transmission performance of the first transmission path meets the preset condition includes: The packet loss rate of the first transmission path is greater than a packet loss rate threshold.

In an implementation, that the communication unit is configured to send the service data through the first transmission path and the second transmission path includes: The communication unit is specifically configured to send, in a sequence of data packets in the service data, the data packets in the service data through the first transmission path; and the communication unit is specifically configured to determine, by the first host based on a transmission delay difference between the first transmission path and the second transmission path, a data packet sent through the second transmission path.

In an implementation, that the communication unit is specifically configured to determine, based on the transmission delay difference between the first transmission path and the second transmission path, the data packet sent through the second transmission path includes: The communication unit is specifically configured to: when determining, based on the transmission delay difference between the first transmission path and the second transmission path, that the transmission delay of the first transmission path is less than a transmission delay of the second transmission path, calculate a quantity m of data packets sent through the first transmission path within a time period corresponding to the transmission delay difference; and the communication unit is specifically configured to determine, based on the quantity m of data packets and a first data packet currently sent through the first transmission path, a second data packet sent through the second transmission path, where the second data packet is a data packet after m data packets of the first data packet.

In an implementation, that the communication unit is specifically configured to determine, based on the transmission delay difference between the first transmission path and the second transmission path, the data packet sent through the second transmission path includes: The communication unit is specifically configured to: when determining, based on the transmission delay difference between the first transmission path and the second transmission path, that the transmission delay of the first transmission path is less than the transmission delay of the second transmission path, calculate the quantity m of data packets sent through the first transmission path within the time period corresponding to the transmission delay difference; and the communication unit is specifically configured to: when the quantity m of data packets does not exceed a first threshold, determine that the second data packet sent through the second transmission path is the same as the first data packet currently sent through the first transmission path.

In an implementation, that the communication unit is specifically configured to determine, based on the transmission delay difference between the first transmission path and the second transmission path, the data packet sent through the second transmission path includes: The communication unit is specifically configured to: when determining, based on the transmission delay difference between the first transmission path and the second transmission path, that the transmission delay of the first transmission path is less than the transmission delay of the second transmission path, calculate the quantity m of data packets sent through the first transmission path within the time period corresponding to the transmission delay difference; and the communication unit is specifically configured to: when the quantity m of data packets is greater than a second threshold, determine that the data packet sent through the second transmission path is a last data packet in a buffer the first host.

In an implementation, the communication apparatus further includes: a determining unit, configured to determine, according to a first preset policy, a first network corresponding to the first transmission path from a plurality of networks accessed by the first host, where the first preset policy includes: determining, based on network quality and/or network types of the plurality of networks accessed by the first host, the first network corresponding to the first transmission path.

In an implementation, the first preset policy specifically includes: when it is determined, based on the network types of the plurality of networks accessed by the first host, that the plurality of networks accessed by the first host include a wireless fidelity Wi-Fi network and a cellular network, determining that the Wi-Fi network is the first network corresponding to the first transmission path.

In an implementation, the determining unit is further configured to determine, according to a second preset policy, a second network corresponding to the second transmission path from the plurality of networks accessed by the first host, where the second preset policy includes: determining, based on the network quality and/or the network types of the plurality of networks accessed by the first host, the second network corresponding to the second transmission path from a network other than the first network.

According to a fourth aspect, a communication apparatus is provided. The communication apparatus is used in a first host, and the communication apparatus includes a first sending unit and a second sending unit. The first sending unit is configured to send, in a sequence of data packets in service data, the data packets in the service data through a first transmission path. The second sending unit is configured to determine, based on a transmission delay difference between the first transmission path and a second transmission path, a data packet sent through the second transmission path, where the first transmission path and the second transmission path are transmission paths that are between the first host and a second host and that are in networks of different standards.

In an implementation, that the second sending unit is configured to determine, based on the transmission delay difference between the first transmission path and the second transmission path, the data packet sent through the second transmission path includes: The second sending unit is specifically configured to: when determining, based on the transmission delay difference between the first transmission path and the second transmission path, that a transmission delay of the first transmission path is less than a transmission delay of the second transmission path, calculate a quantity m of data packets sent through the first transmission path within a time period corresponding to the transmission delay difference; and the second sending unit is specifically configured to determine, based on the quantity m of data packets and a first data packet currently sent through the first transmission path, a second data packet sent through the second transmission path, where the second data packet is a data packet after m data packets of the first data packet.

In an implementation, that the second sending unit is configured to determine, based on the transmission delay difference between the first transmission path and the second transmission path, the data packet sent through the second transmission path includes: The second sending unit is specifically configured to: when determining, based on the transmission delay difference between the first transmission path and the second transmission path, that the transmission delay of the first transmission path is less than the transmission delay of the second transmission path, calculate the quantity m of data packets sent through the first transmission path within the time period corresponding to the transmission delay difference; and the second sending unit is specifically configured to: when the quantity m of data packets does not exceed a first threshold, determine that the second data packet sent through the second transmission path is the same as the first data packet currently sent through the first transmission path.

In an implementation, that the second sending unit is configured to determine, based on the transmission delay difference between the first transmission path and the second transmission path, the data packet sent through the second transmission path includes: The second sending unit is specifically configured to: when determining, based on the transmission delay difference between the first transmission path and the second transmission path, that the transmission delay of the first transmission path is less than the transmission delay of the second transmission path, calculate the quantity m of data packets sent through the first transmission path within the time period corresponding to the transmission delay difference; and the second sending unit is specifically configured to: when the quantity m of data packets is greater than a second threshold, determine that the data packet sent through the second transmission path is a last data packet in a buffer of the first host.

According to a fifth aspect, a communication apparatus is provided, including a memory and a processor. The memory is configured to store computer instructions, and the processor is configured to invoke the computer instructions from the memory and run the computer instructions, to implement the method according to any one of the first aspect or the implementations of the first aspect, or implement the method according to any one of the second aspect or the implementations of the second aspect.

According to a sixth aspect, a computer-readable storage medium is provided. The computer-readable storage medium stores instructions. When the instructions are run on a processor, the method according to any one of the first aspect or the implementations of the first aspect is implemented, or the method according to any one of the second aspect or the implementations of the second aspect is implemented.

According to a seventh aspect, a computer program product is provided. The computer program product includes instructions. When the instructions are run on a processor, the method according to any one of the first aspect or the implementations of the first aspect is implemented, or the method according to any one of the second aspect or the implementations of the second aspect is implemented.

For technical effect generated by any one of the third aspect to the seventh aspect and the implementations of the third aspect to the seventh aspect, refer to the first aspect and the corresponding implementations of the first aspect or the second aspect and the corresponding implementations of the second aspect. Repeated parts are not described herein again.

### BRIEF DESCRIPTION OF DRAWINGS

FIG. 1 is a first diagram of a structure of a transmission system according to an embodiment of this application;
FIG. 2 is a second diagram of a structure of a transmission system according to an embodiment of this application;
FIG. 3 is a third diagram of a structure of a transmission system according to an embodiment of this application;
FIG. 4 is a fourth diagram of a structure of a transmission system according to an embodiment of this application;
FIG. 5A and FIG. 5B are a first schematic flowchart of packet encapsulation and decapsulation in a transmission system according to an embodiment of this application;
FIG. 6A and FIG. 6B are a second schematic flowchart of packet encapsulation and decapsulation in a transmission system according to an embodiment of this application;
FIG. 7 is a fifth diagram of a structure of a transmission system according to an embodiment of this application;
FIG. 8 is a first schematic flowchart of a communication method according to an embodiment of this application;
FIG. 9 is a second schematic flowchart of a communication method according to an embodiment of this application;
FIG. 10(a) and FIG. 10(b) are a third schematic flowchart of a communication method according to an embodiment of this application;
FIG. 11 is a fourth schematic flowchart of a communication method according to an embodiment of this application;
FIG. 12 is a fifth schematic flowchart of a communication method according to an embodiment of this application;
FIG. 13 is a sixth schematic flowchart of a communication method according to an embodiment of this application;
FIG. 14 is a seventh schematic flowchart of a communication method according to an embodiment of this application;
FIG. 15 is an eighth schematic flowchart of a communication method according to an embodiment of this application;
FIG. 16 is a ninth schematic flowchart of a communication method according to an embodiment of this application;
FIG. 17 is a sixth diagram of a structure of a transmission system according to an embodiment of this application;
FIG. 18 is a tenth schematic flowchart of a communication method according to an embodiment of this application;
FIG. 19 is an eleventh schematic flowchart of a communication method according to an embodiment of this application;
FIG. 20 is a seventh diagram of a structure of a transmission system according to an embodiment of this application;
FIG. 21 is a twelfth schematic flowchart of a communication method according to an embodiment of this application;
FIG. 22 is a first diagram of a structure of a communication apparatus according to an embodiment of this application;
FIG. 23 is a second diagram of a structure of a communication apparatus according to an embodiment of this application; and
FIG. 24 is a third diagram of a structure of a communication apparatus according to an embodiment of this application.

### DESCRIPTION OF EMBODIMENTS

The following describes technical solutions in embodiments of this application with reference to accompanying drawings in embodiments of this application. To clearly describe the technical solutions in embodiments of this application, terms such as "first" and "second" are used in embodiments of this application to distinguish between same items or similar items that provide basically same functions or purposes. A person skilled in the art may understand that the terms "first" and "second" do not limit a quantity and an execution sequence, and the terms "first" and "second" do not indicate a definite difference. In addition, in embodiments of this application, terms such as "example" or "for example" are used to give an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" are intended to present a related concept in a specific manner for ease of understanding.

First, related technologies in embodiments of this application are described.

Multipath transmission is a technology in which data is transmitted through a plurality of transmission paths. In multipath transmission, a host may transmit data through transmission paths of a plurality of accessed networks of different standards. For example, when service data is transmitted between a terminal device and a service server, the electronic device may send the service data to the service server through a transmission path of a cellular network and a transmission path of a wireless fidelity (wireless fidelity, Wi-Fi) network. Alternatively, when sending the service data to the electronic device, the service server may send the service data to the electronic device through the transmission path of the cellular network and the transmission path of the Wi-Fi network. This can enhance data transmission efficiency.

Especially in poor network conditions, the electronic device can integrate transmission capabilities of different networks (for example, integrate transmission capabilities of the Wi-Fi network and the cellular network) through multipath transmission, to transmit data through a plurality of transmission paths. In this way, when either the Wi-Fi network or the cellular network experiences poor connectivity, the other network may be used as a secondary path to enhance performance (for example, a redundantly transmitted data packet in the cellular network may compensate for a data packet discarded in the Wi-Fi network, or a redundantly transmitted data packet in the cellular network may be a data packet with a large delay).

Currently, mainstream multipath transmission includes a multipath transmission control protocol (multipath transmission control protocol, MPTCP). From a perspective of a hierarchical network architecture, the MPTCP is located at a transport layer. The MPTCP protocol is based on a transmission control protocol (transmission control protocol, TCP) protocol of the transport layer in terms of a protocol format, and address information of a plurality of interfaces is exchanged between a transmitter and a receiver through a newly added TCP option, to establish a plurality of TCP connections to implement a function of multipath concurrent data transmission.

To facilitate understanding of the technical solutions provided in embodiments of this application, the following describes an application scenario in embodiments of this application by using an example.

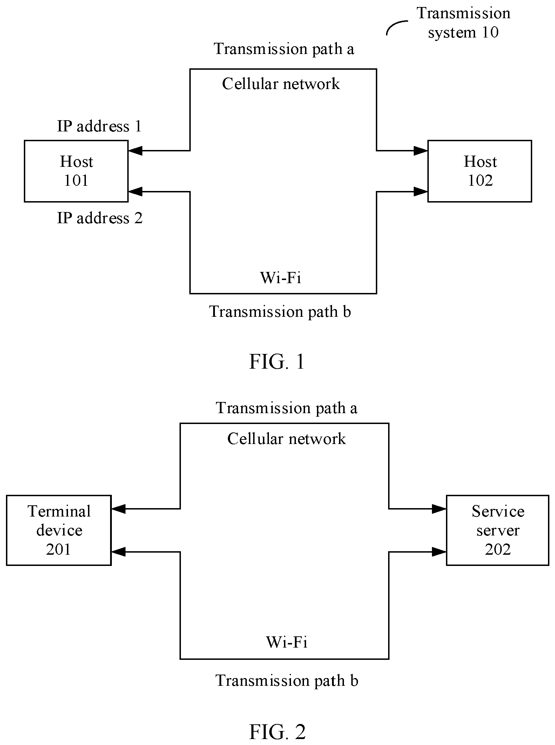

FIG. 1 is a diagram of a structure of a transmission system according to an embodiment of this application. A transmission system 10 includes a host 101 and a host 102. Data may be transmitted between the host 101 and the host 102 in a multipath transmission manner or a single-path transmission manner according to the technical solutions provided in embodiments of this application.

For example, the host 101 establishes a connection to the host 102 through a transmission path a of a cellular network by using an IP address 1; and the host 101 establishes a connection to the host 102 through a transmission path b of a Wi-Fi network by using an IP address 2. In this way, the host 101 may send data to the host 102 through the transmission path a and the transmission path b in the multipath transmission manner; or the host 101 may send data to the host 102 through one of the transmission path a or the transmission path b in the single-path transmission manner.

When the multipath transmission manner is used for transmission, and a redundant transmission mode is used, the host 101 may duplicate to-be-transmitted data into two copies, and send the two copies of data to the host 102 through the transmission path a and the transmission path b respectively. In the redundant transmission mode, when data on one transmission path is lost, the lost data may be obtained from the other transmission path, thereby improving data transmission efficiency.

In addition, when the multipath transmission manner is used for transmission, and an aggregation transmission mode is used, the host 101 may divide to-be-transmitted data into two parts, and send the two parts of data to the host 102 through the transmission path a and the transmission path b respectively. Then, the host 102 aggregates data from the two transmission paths to obtain the complete data. The aggregation transmission mode can compensate for a problem of an insufficient transmission rate of a single transmission path, thereby improving data transmission efficiency.

In an actual application process, the host 101 and the host 102 each may be any one of electronic devices such as a personal computer (including a desktop computer, a laptop computer, a handheld computer, a notebook computer, and the like), an ultra-mobile personal computer (ultra-mobile personal computer, UMPC), a smartphone, or a server. Alternatively, the host 101 and the host 102 each may be a part of a hardware/software apparatus in the electronic device.

It may be understood that, in FIG. 1, the transmission path a corresponding to the Wi-Fi network and the transmission path b corresponding to the cellular network are used as examples to briefly describe the multipath transmission manner between the host 101 and the host 102. In an actual application process, when the host 101 can access networks of more standards (for example, the host 101 can access a plurality of networks in cellular networks such as a wideband code division multiple access (wideband code division multiple access, WCDMA) mobile communication system network, a long term evolution (long term evolution, LTE) network, and a fifth generation mobile communication technology (fifth-generation mobile communication technology, 5G), and the host 101 may further access a Wi-Fi network in a 2.4 GHz frequency band and a Wi-Fi network in a 5 GHz frequency band), the host 101 may select transmission paths of any two of networks of the plurality of standards, and perform multipath transmission through the two transmission paths.

In other words, network types corresponding to a plurality of transmission paths between the host 101 and the host 102 may not be limited in embodiments of this application.

In an implementation, when the technical solutions provided in embodiments of this application are applied to a scenario in which service data is transmitted between a terminal device and a service server, as shown in FIG. 2, the host 101 may be a terminal device 201 (specifically, the terminal device 201 may include a personal computer, a smartphone, a wearable intelligent device, or the like) or a part of a hardware/software apparatus in the terminal device 201, and the host 102 may be a service server 202 or a part of a hardware/software apparatus in the service server 202.

In this case, the terminal device 201 and the service server 202 may transmit the service data to each other through one or more of a plurality of transmission paths (for example, a transmission path a corresponding to a cellular network and a transmission path b corresponding to a Wi-Fi network) in the multipath transmission manner or the single-path transmission manner.

In another implementation, it is considered that when the service data is transmitted between the terminal device and the service server in the multipath transmission manner, and the service data is transmitted in a manner shown in FIG. 2, both the terminal device 201 and the service server 202 need to support a related protocol of multipath transmission (for example, the MPTCP). For example, in a process in which the terminal device 201 sends the service data to the service server 202, the terminal device 201 needs to send the service data to the service server 202 through corresponding protocol interfaces according to the related protocol of multipath transmission. In addition, in a process of receiving the service data, the service server 202 also needs to separately receive the service data on a plurality of paths through related protocol interfaces of multipath transmission.

The MPTCP is used as an example. In a process in which the terminal device 201 sends the service data to the service server 202, the terminal device 201 needs to change an interface for transmitting the service data from an original classic TCP socket interface to an application programming interface (application program interface, API) dedicated to the MPTCP protocol, so that the terminal device 201 separately sends the service data to the service server 202 on a plurality of transmission paths through APIs dedicated to the MPTCP protocol. Similarly, in a process of receiving the service data, the service server 202 also needs to separately receive the service data on the plurality of transmission paths through APIs dedicated to the MPTCP protocol.

Therefore, to reduce application difficulty of multipath transmission, in another implementation, a "device+cloud proxy forwarding" architecture may be used to implement multipath transmission between the terminal device and the service server.

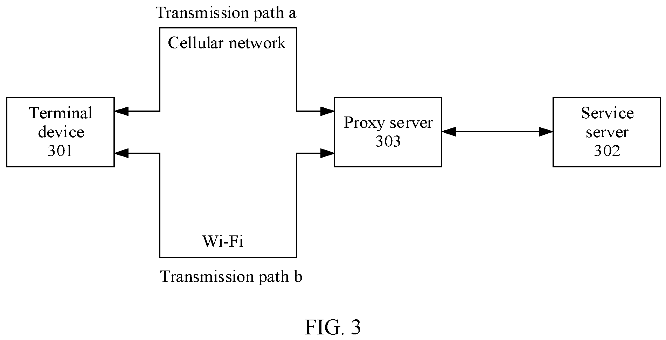

For example, in the "device+cloud proxy forwarding" architecture, as shown in FIG. 3, when a terminal device 301 sends service data to a service server 302 in the multipath transmission manner, the terminal device 301 may send the service data to a proxy server 303 (in this case, the terminal device 301 is equivalent to the host 101 in FIG. 1, and the proxy server 303 is equivalent to the host 102 in FIG. 1) on a plurality of transmission paths (a transmission path of a cellular network and a transmission path of a Wi-Fi network are used as an example in FIG. 3) through a related protocol of multipath transmission (for example, the MPTCP protocol or another proprietary protocol used for multipath transmission). After receiving the service data through the plurality of transmission paths, the proxy server 303 performs protocol conversion on the received service data, to send the service data to the service server 302 by using a related protocol of single-path transmission (for example, a TCP/UDP protocol originally used between the terminal device 301 and the service server 302).

Specifically, when the terminal device 301 sends the service data to the service server 302, the terminal device 301 may intercept, to a user mode by using a virtual private network service (virtual private network service, VPN service), a TCP/UDP packet that carries the service data, or may intercept, in a kernel mode of an operating system by using an extended Berkeley packet filter (extended berkeley packet filter, eBPF), a TCP/UDP packet that carries the service data. Then, the terminal device 301 re-encapsulates the intercepted TCP/UDP packet and sends the packet to the proxy node through a plurality of transmission paths. After receiving the packets, the proxy node deduplicates redundant data packets through dual transmission and selective reception, and sorts and sends the deduplicated packets to the service server 302 according to an original TCP/UDP protocol (it may be understood that a redundant transmission mode is mainly used for description herein). When an aggregation transmission mode is used, deduplication may not need to be performed through dual transmission and selective reception, but received packets are sorted and then sent to the service server 302 according to the original TCP/UDP protocol.

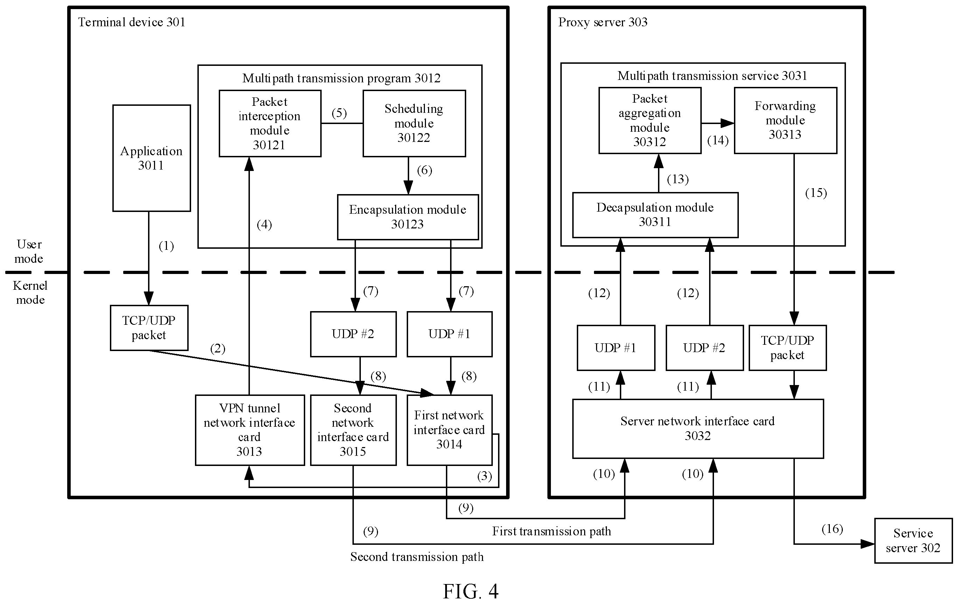

For example, as shown in FIG. 4, a VPN tunnel network interface card 3013 configured to intercept a TCP/UDP packet runs in a kernel mode of the terminal device 301, and a multipath transmission program 3012 for re-encapsulating the TCP/UDP packet runs in a user mode of the terminal device 301. For ease of understanding, in FIG. 4, sequence numbers (1) to (16) are used as examples to indicate directions of service data.

After obtaining service data that needs to be sent by an application 3011 (that is, an application that needs to send the service data to the service server 302), the terminal device 301 first encapsulates the service data into a TCP/UDP packet, and sends, in the kernel mode, the TCP/UDP packet to a first network interface card 3014 (for example, the first network interface card 3014 may be a Wi-Fi network interface card or an LTE network interface card) corresponding to a first transmission path (that is, one of a plurality of transmission paths). Then, the VPN tunnel network interface card 3013 intercepts the TCP/UDP packet from the first network interface card 3014, and sends the TCP/UDP packet to the multipath transmission program 3012 in the user mode.

The multipath transmission program 3012 includes a packet interception module 30121, a scheduling module 30121, and an encapsulation module 30123.

The packet interception module 30121 is configured to receive the TCP/UDP packet from the VPN tunnel network interface card 3013.

The scheduling module 30121 is configured to allocate the TCP/UDP packet to two transmission paths. Specifically, the scheduling module 30121 may choose, according to the method in S401 to S403 or S501 to S503 in the following embodiments of this application, to transmit the service data in a single-path transmission manner or a multipath transmission manner. Further, when transmission is performed in the multipath transmission manner, the scheduling module 30121 may further determine, according to the method in S5021 and S5022 in the following embodiments of this application, data packets respectively transmitted through the two transmission paths.

The encapsulation module 30123 is configured to: encapsulate the service data that needs to be separately transmitted through the two transmission paths (for example, encapsulate the original TCP/UDP packet into UDP packets in a VPN tunnel, for example, a UDP #1 and a UDP #2 in the figure), and send the encapsulated service data through corresponding network interface cards (for example, send the encapsulated service data through the first network interface card 3014 and a second network interface card 3015 in the figure).

In addition, a multipath transmission service 3031 corresponding to the multipath transmission program 3012 runs in a user mode of the proxy server 303. After receiving the encapsulated packets (that is, the UDP #1 and the UDP #2) through the two transmission paths, a server network interface card 3032 in the proxy server 303 sends the encapsulated packets to the multipath transmission service 3031.

The multipath transmission service 3031 includes a decapsulation module 30311, a packet aggregation module 30312, and a forwarding module 30313.

The decapsulation module 30311 is configured to decapsulate the encapsulated packets (that is, the UDP #1 and the UDP #2) received by the server network interface card 3032, to obtain original TCP/UDP packets.

The packet aggregation module 30312 is configured to deduplicate the TCP/UDP packets.

The forwarding module 30313 is configured to forward the deduplicated TCP/UDP packet to the service server 302 through the server network interface card 3032.

Then, after receiving the TCP/UDP packet, the service server 302 may obtain the service data in the TCP/UDP packet through an original TCP/UDP protocol corresponding port between the terminal device 301 and the service server 302.

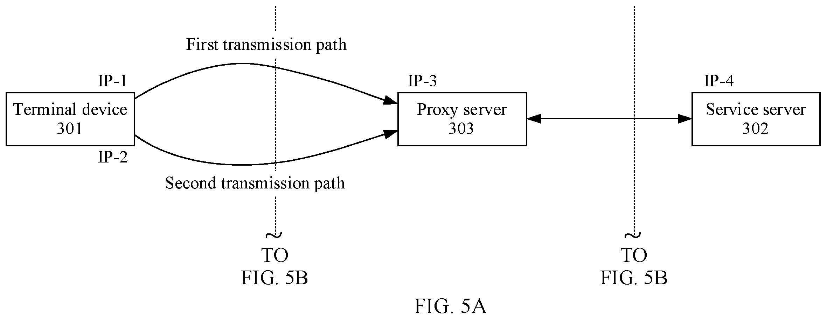

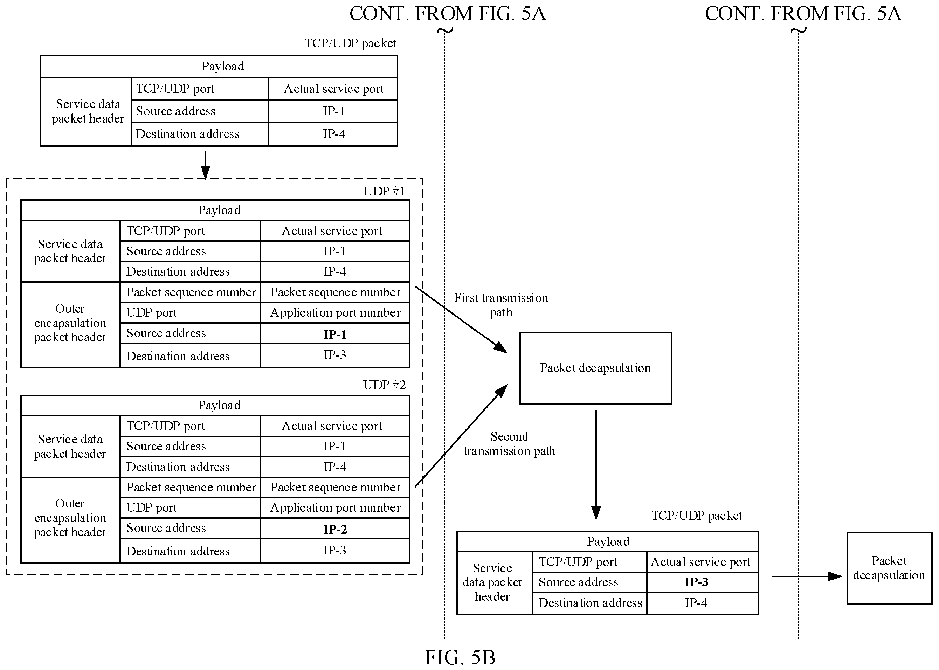

For example, FIG. 5A and FIG. 5B are a diagram of a change process of a packet carrying the service data in each phase in a process in which the terminal device 301 sends the service data to the service server 302.

After obtaining the TCP/UDP packet carrying the service data, the terminal device 301 encapsulates the TCP/UDP packet into data packets UDP #1 and UDP #2 that are transmitted through the first transmission path and a second transmission path.

In the TCP/UDP packet carrying the service data, a payload part is used to carry the service data. In a packet header part, a "TCP/UDP port" field is an actual service port number, a source address is a primary path address IP-1 of the terminal device 301 (for example, an address of the first network interface card in FIG. 4 is the primary path address), and a destination address is an address of the service server 302.

In a process of encapsulating the TCP/UDP packet into the data packets UDP #1 and UDP #2, as shown in FIG. 5A and FIG. 5B, the TCP/UDP packet may be used as payload parts of the data packets UDP #1 and UDP #2, and new packet headers are encapsulated into the data packets UDP #1 and UDP #2.

A packet header of the data packet UDP #1 includes: a "packet sequence number" field, where the "packet sequence number" field is used to record a packet sequence number, so that a receiver (the proxy server 303) performs operations such as sorting and deduplication on a packet; a "UDP port" field, where the "UDP port" field is used to record an application port number, so that the receiver (the proxy server 303) determines an application port corresponding to a packet; and a "source address" field and a "destination address" field, where the "source address" field and the "destination address" field are respectively used to record the address IP-1 of the terminal device 301 and an address IP-3 of the proxy server 303 on the first transmission path, so that the UDP #1 is sent to the proxy server 303 through the first transmission path.

Content of a packet header of the data packet UDP #2 is similar to that of the data packet UDP #1. A difference lies in that a source address of the data packet UDP #2 is an address IP-2 of the terminal device 301 on the second transmission path, so that the UDP #2 is sent to the proxy server 303 through the second transmission path.

After receiving the data packets UDP #1 and UDP #2, the proxy server 303 performs operations such as decapsulation, sorting, and deduplication on the data packets UDP #1 and UDP #2, to obtain the TCP/UDP packet that carries the service data. After a source address in the TCP/UDP packet is replaced with the address IP-3 of the proxy server 303, the TCP/UDP packet is forwarded to the service server 302. Then, after receiving the TCP/UDP packet, the service server 302 may obtain the service data in the TCP/UDP packet through the original TCP/UDP protocol corresponding port between the terminal device 301 and the service server 302.

In addition, a process in which the service server 302 sends the service data to the terminal device 301 is equivalent to a reverse process of a process in which the terminal device 301 sends the service data to the service server 302.

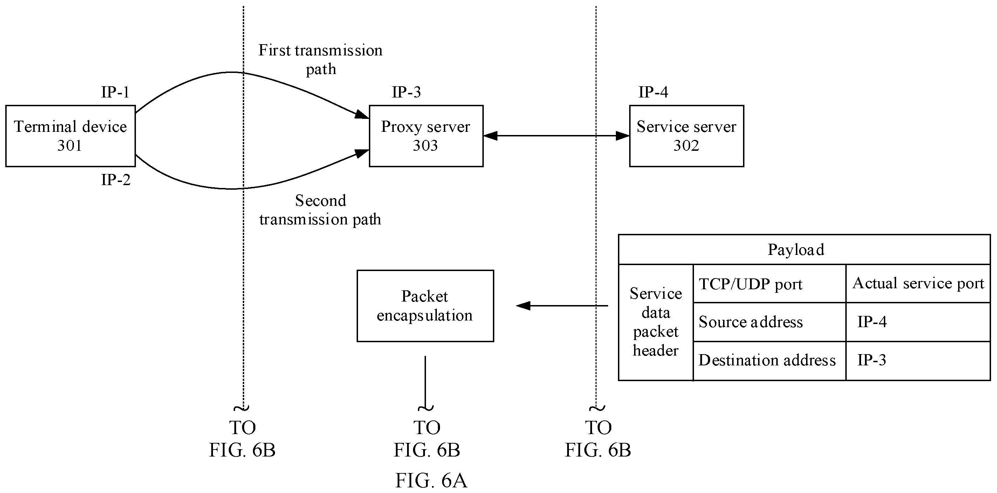

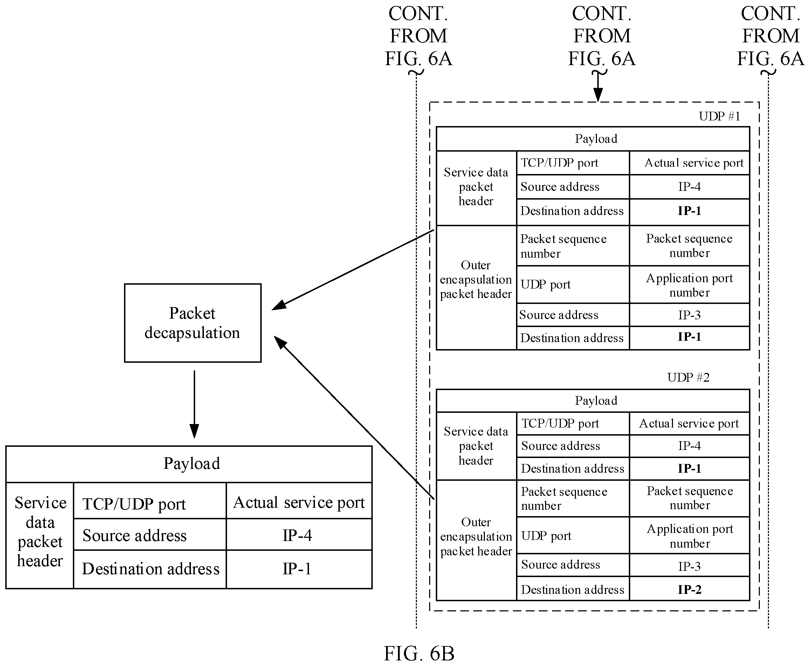

For example, as shown in FIG. 6A and FIG. 6B, the service server 302 sends a TCP/UDP packet carrying the service data to the proxy server 303. In the TCP/UDP packet, a payload part is used to carry the service data; and in a packet header part, a "TCP/UDP port" field is an actual service port number, a source address is a primary path address IP-4 of the service server 302, and a destination address is an address of the proxy server 303.

After receiving the TCP/UDP packet, the proxy server 303 replaces the destination address in the TCP/UDP packet with a primary path address of the terminal device 301 (for example, the address of the first network interface card in FIG. 4 is the primary path address), separately encapsulates the TCP/UDP packet into data packets UDP #1 and UDP #2, and separately sends the data packets UDP #1 and UDP #2 to the terminal device 301 through the first transmission path and the second transmission path. For content of packet headers of the data packets UDP #1 and UDP #2, refer to the content of the data packets UDP #1 and UDP #2 in FIG. 5A and FIG. 5B.

After receiving the data packets UDP #1 and UDP #2, the terminal device 301 performs operations such as decapsulation, sorting, and deduplication, to obtain the TCP/UDP packet that carries the service data.

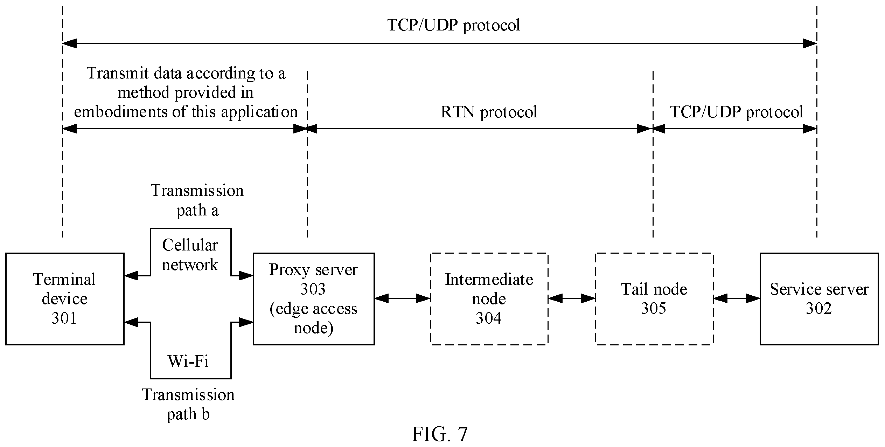

In addition, in a "device+cloud proxy forwarding" architecture, to avoid a problem that a transmission delay is large due to a far distance between a physical location of the proxy server 303 and the application server 302, network acceleration may be further performed by using a technology such as a real time network (real time network, RTN). When the RTN network is used to perform accelerated forwarding, as shown in FIG. 7, the proxy server 303 in this embodiment of this application may be deployed on an edge access node of the RTN network. After receiving packets transmitted through a plurality of paths, the proxy server 303 sorts and deduplicates the packets, re-encapsulates the packets according to an overlay protocol in the RTN network, and then pre-calculates an overlay route, and transmits the data packets to a tail node that is in the RTN network and that is close to a real application server through one or more hops of RTN intermediate nodes. A protocol proxy module of the tail node in the RTN network completes conversion between an RTNP protocol and a TCP/UDP protocol, and communicates with the application server by using the TCP/UDP protocol.

The following describes the technical solutions provided in embodiments of this application with reference to examples.

In embodiments of this application, compared with a single-path transmission manner, additional traffic costs are caused and power consumption overheads are increased in a process of transmitting service data through multipath transmission.

FIG. 1 is used as an example. When the redundant transmission mode is used, the host 101 duplicates to-be-transmitted service data into two copies, and sends the two copies of service data to the host 102 through two transmission paths. The service data is repeatedly transmitted between the host 101 and the host 102 twice, causing double traffic costs. In addition, software/hardware resources respectively corresponding to the two transmission paths (for example, network interface cards respectively corresponding to the two transmission paths) need to be occupied in the host 101 for data transmission, increasing power consumption overheads of the host 101.

For another example, when the aggregation transmission mode is used, the host 101 divides to-be-transmitted data into two parts, and sends the two parts to the host 102 through two transmission paths. Software/hardware resources respectively corresponding to the two transmission paths (for example, network interface cards respectively corresponding to the two transmission paths) also need to be occupied in the host 101 for data transmission, increasing power consumption overheads of the host 101.

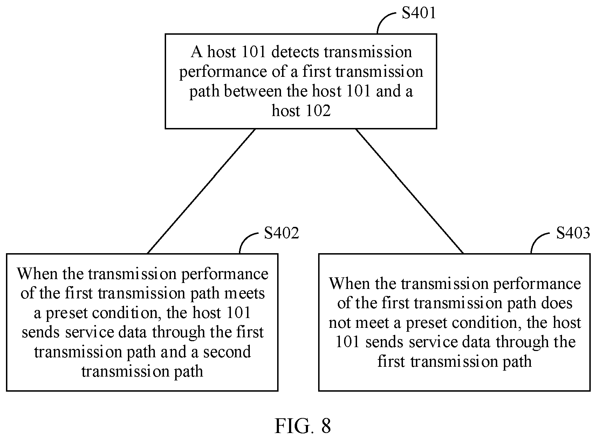

To resolve the foregoing technical problem, an embodiment of this application provides a communication method. In the method, when the host 101 sends the service data to the host 102, as shown in FIG. 8, the host 101 may detect transmission performance of a transmission path (referred to as a "first transmission path" below) of one of accessed networks of a plurality of standards (that is, S401). Then, the host 101 determines, based on the detected transmission performance of the first transmission path, whether to send the service data through the first transmission path and another transmission path (referred to as a "second transmission path" below) in a multipath transmission manner, or send the service data through the first transmission path in a single-path transmission manner. In other words, the host 101 may determine, based on the detected transmission performance of the first transmission path, that when the transmission performance of the first transmission path meets a preset condition (for example, the preset condition may include various conditions reflecting poor transmission performance of the transmission path, and specific content of the preset condition is described in detail below), the host 101 sends the service data through the first transmission path and the second transmission path (that is, S402); or when the transmission performance of the first transmission path does not meet a preset condition, the host 101 sends the service data through the first transmission path (that is, S403).

It can be learned that, in the foregoing method in this embodiment of this application, when the transmission performance of the first transmission path meets the preset condition, the service data is sent through the first transmission path and the second transmission path in the multipath transmission manner; or when the transmission performance of the first transmission path does not meet the preset condition, the service data may be sent through the first transmission path in the single-path transmission manner. In other words, the multipath transmission manner is not used in this case. In this way, according to the foregoing method in this embodiment of this application, the multipath transmission manner or the single-path transmission manner can be selected for data transmission based on an actual requirement. This avoids a problem of high traffic costs and power consumption overheads caused by blindly using the multipath transmission manner for data transmission.

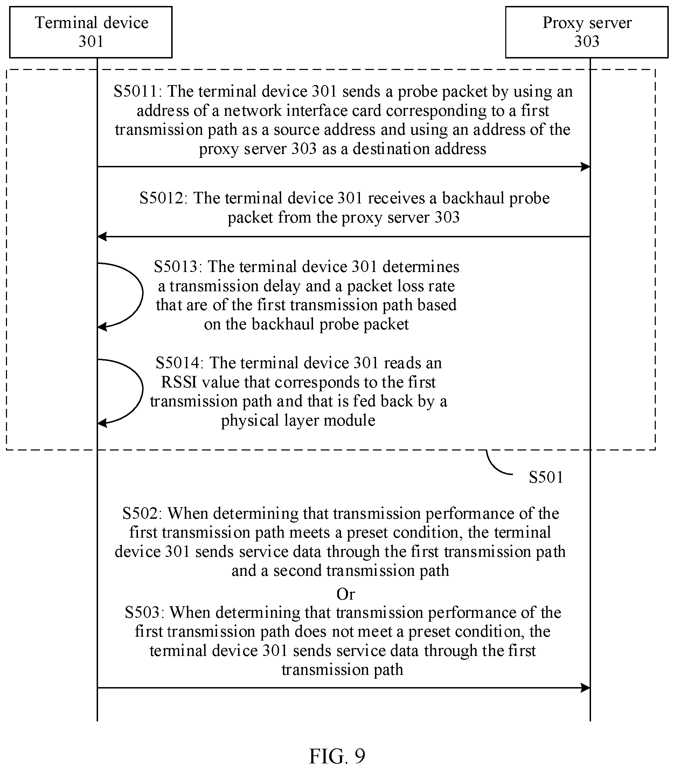

The following describes a detailed process of the communication method provided in this embodiment of this application by using a process in which the terminal device 301 sends the service data to the service server 302 in FIG. 3 as an example. As shown in FIG. 9, the method includes the following steps:

S501: The terminal device 301 detects transmission performance of a first transmission path between the terminal device 301 and the proxy server 303.

For example, when the terminal device 301 detects that an application (for example, an application such as a mobile game or a video conference) running on the terminal device 301 is ready to send the service data, the terminal device 301 may detect the transmission performance of the first transmission path by performing S501, to subsequently determine, based on a detection result, whether to send the service data in the multipath transmission manner or the single-path transmission manner (that is, S502 below).

For another example, in a process in which the terminal device 301 sends the service data, the terminal device 301 may alternatively detect the transmission performance of the first transmission path by performing S501, to determine, based on a detection result, whether to send the service data that needs to be sent subsequently in the multipath transmission manner or the single-path transmission manner (that is, S502 and S503 below). In other words, in this case, before the terminal device 301 performs S501, the terminal device 301 may first send a part of the service data in the single-path transmission manner (or in the multipath transmission manner). After the terminal device 301 performs S501, and determines, based on the detection result, whether to send the service data that needs to be subsequently sent in the multipath transmission manner or the single-path transmission manner (that is, S502 and S503 below), the terminal device 301 sends the subsequent service data in a corresponding manner.

In addition, in this embodiment of this application, the first transmission path may be a transmission path in one of a plurality of networks that are of different standards and that are accessed by the terminal device 301.

For example, when networks accessed by the terminal device 301 include a cellular network and a Wi-Fi network, the first transmission path may be a transmission path corresponding to the cellular network or a transmission path corresponding to the Wi-Fi network.

Further, when the terminal device 301 accesses a plurality of cellular networks and a plurality of Wi-Fi networks, the first transmission path may be a transmission path in one of the plurality of cellular networks and the plurality of Wi-Fi networks.

For example, when the terminal device 301 supports both a Wi-Fi network in a 2.4 GHz frequency band and a Wi-Fi network in a 5 GHz frequency band, and the terminal device 301 has two cellular network interface cards (for example, one cellular network interface card is a long term evolution (long term evolution, LTE) network interface card, and the other is a 5th generation mobile communication technology (fifth-generation mobile communicating technology, 5G) network interface card) and has a dual-cellular concurrent data transmission capability, the first transmission path may be a transmission path corresponding to one of the four networks: the Wi-Fi network in the 2.4 GHz frequency band, the Wi-Fi network in the 5 GHz frequency band, the LTE network, and the 5G network.

The following describes in detail, by using content of S701, how to determine, from a plurality of networks accessed by the terminal device 301, a network corresponding to the first transmission path. Details are not described herein.

In an implementation, the transmission performance of the first transmission path may specifically include one or more of a transmission delay, a packet loss rate, and a received signal strength indicator (received signal strength indicator, RSSI) that are of the first transmission path. In other words, S501 may specifically include: The terminal device 301 detects one or more of the transmission delay, the packet loss rate, and the RSSI that are of the first transmission path.

In a possible design, when the transmission performance of the first transmission path includes the transmission delay and the packet loss rate that are of the first transmission path, S501 may specifically include the following content of S5011 to S5013:

S5011: The terminal device 301 periodically sends a probe packet by using an address of a network interface card corresponding to the first transmission path as a source address and using an address of the proxy server 303 as a destination address.

For example, when the first transmission path is a transmission path of a Wi-Fi network, the terminal device 301 periodically sends, by using an IP address of a Wi-Fi network interface card in the terminal device 301 as the source address and using the IP address of the proxy server 303 as the destination address, the probe packet through the Wi-Fi network interface card.

The probe packet may include an identifier field (Seq). Values are assigned, in an ascending order, to identifier fields of probe packets that are sequentially sent. For example, an identifier field Seq of a first probe packet is equal to 1, an identifier field Seq of a second probe packet is equal to 2, the rest may be deduced by analogy, and an identifier field Seq of an n^{th} probe packet is equal to n.

In addition, the probe packet may further include a system timestamp for sending the probe packet. For example, before sending the probe packet, the terminal device 301 may add a system timestamp of a current moment to the probe packet.

A sending period of the probe packet may be determined based on an actual requirement. For example, the sending period of the probe packet may be 100 ms, 500 ms, or the like.

S5012: The terminal device 301 receives a backhaul probe packet from the proxy server 303.

Specifically, after receiving the probe packet from the terminal device 301, the proxy server 303 may switch the source address and the destination address in the probe packet to obtain the backhaul probe packet, and send the backhaul probe packet to the terminal device 301, so that the terminal device 301 receives the backhaul probe packet.

S5013: The terminal device 301 determines the transmission delay and the packet loss rate that are of the first transmission path based on the backhaul probe packet.

For example, after receiving the backhaul probe packet, the terminal device 301 may calculate, based on time at which the backhaul probe packet is received and the system timestamp (which indicates time at which the terminal device 301 sends the probe packet) carried in the backhaul probe packet, round-trip time (round trip time, RTT) of transmitting the packet through the first transmission path. The round-trip time of transmitting the packet through the first transmission path may reflect the transmission delay of the first transmission path.

In addition, after receiving backhaul probe packets, the terminal device 301 may determine, based on values of identifier fields in the backhaul probe packets, probe packets that are lost in a probe packet sending process, and then determine the packet loss rate of the first transmission path by counting a quantity of lost probe packets in a specific quantity of probe packets. For example, 20 probe packets are used as one group, and the packet loss rate of the first transmission path is determined as (n×5)% based on a quantity n of lost probe packets in the 20 probe packets.

In another possible design, when the transmission performance of the first transmission path includes the RSSI corresponding to the first transmission path, S501 may specifically include the following content of S5014:

S5014: The terminal device 301 reads, in a preset period, an RSSI value that corresponds to the first transmission path and that is fed back by a physical layer module.

For example, when the first transmission path is a transmission path in a Wi-Fi network, the terminal device 301 may read, in the preset period, an RSSI value (that is, the RSSI value corresponding to the first transmission path) fed back by a Wi-Fi network interface card.

The preset period in which the terminal device 301 reads the RSSI may be determined based on an actual application requirement. For example, the preset period in which the terminal device 301 reads the RSSI may be a period such as 100 ms or 500 ms.

After the terminal device 301 detects the transmission performance of the first transmission path, the method further includes:
S502: When determining that the transmission performance of the first transmission path meets the preset condition, the terminal device 301 sends the service data through the first transmission path and the second transmission path.

The second transmission path and the first transmission path are transmission paths in networks of different standards.

For example, when the first transmission path is a transmission path that is between the terminal device 301 and the proxy server 303 and that is in a Wi-Fi network, the second transmission path may be a transmission path that is between the terminal device 301 and the proxy server 303 and that is in a cellular network. Alternatively, when the first transmission path is a transmission path that is between the terminal device 301 and the proxy server 303 and that is in a cellular network, the second transmission path may be a transmission path that is between the terminal device 301 and the proxy server 303 and that is in a Wi-Fi network.

For another example, both the first transmission path and the second transmission path may be transmission paths that are between the terminal device 301 and the proxy server 303 and that are in Wi-Fi networks. For example, the first transmission path may be a transmission path in a Wi-Fi network in a 2.4 GHz frequency band, and the second transmission path may be a transmission path in a Wi-Fi network in a 5 GHz frequency band. Alternatively, the first transmission path may be a transmission path in a Wi-Fi network in a 5 GHz frequency band, and the second transmission path may be a transmission path in a Wi-Fi network in a 2.4 GHz frequency band.

For another example, both the first transmission path and the second transmission path may be transmission paths that are between the terminal device 301 and the proxy server 303 and that are in cellular networks. For example, the first transmission path may be a transmission path in an LTE network, and the second transmission path may be a transmission path in a 5G network. Alternatively, the first transmission path may be a transmission path in a 5G network, and the second transmission path may be a transmission path in an LTE network. Alternatively, the first transmission path may be a transmission path in a wideband code division multiple access (wideband code division multiple access, WCDMA) mobile communication system network, and the second transmission path may be a transmission path in a 5G network. Alternatively, the first transmission path is a transmission path in a 5G network, and the second transmission path is a transmission path in a WCDMA network.

The following describes in detail, by using content of S702, how to determine, from the plurality of networks accessed by the terminal device 301, the network corresponding to the first transmission path in this embodiment of this application. Details are not described herein.

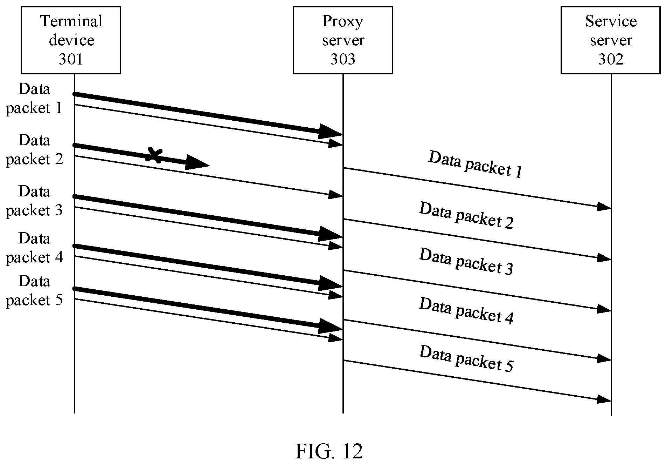

In addition, the following describes in detail, by using corresponding content in FIG. 12 to FIG. 19, a specific process in which the terminal device 301 sends the service data to the proxy server 303 through the first transmission path and the second transmission path in this embodiment of this application. Details are not described herein.

In addition, the method may further include:
S503: When determining that the transmission performance of the first transmission path does not meet the preset condition, the terminal device 301 sends the service data through the first transmission path.

In other words, in the method provided in this embodiment of this application, when the transmission performance of the first transmission path meets the preset condition, the service data is sent through the first transmission path and the second transmission path in the multipath transmission manner; or when the transmission performance of the first transmission path does not meet the preset condition, the service data may be sent through the first transmission path in the single-path transmission manner.

For example, in a process in which the service data is transmitted between the terminal device 301 and the proxy server 303 in the manner shown in FIG. 4, when the terminal device 301 determines that the service data needs to be sent through the first transmission path, the terminal device 301 intercepts, by using the VPN service network interface card 3013, the TCP/UDP packet that carries the service data to the user mode, and then, after the terminal device 301 determines to send the service data through the first transmission path, the scheduling module 30122 invokes the encapsulation module 30123 to encapsulate the TCP/UDP packet into the data packet UDP #1 in the manner shown in FIG. 5A and FIG. 5B, and sends the data packet UDP #1 to the proxy server 303. After receiving the data packet UDP #1, the proxy server 303 decapsulates the data packet UDP #1, modifies a source address in the TCP/UDP packet, and sends the modified TCP/UDP packet to the service server 302, to complete transmission.

It may be understood that, in an actual application process, the terminal device 301 may periodically perform content in S501 to S503, so that the terminal device 301 selects, in each period based on a transmission performance change of the first transmission path, to send the service data in a manner of S502 or S503.

The following describes content included in the preset condition in S502 and S503. Specifically, the preset condition may include one or more of the following Implementations 1 to 7:

In Implementation 1, the preset condition may include: The transmission delay of the first transmission path is greater than a delay threshold (referred to as a "first delay threshold" below for ease of differentiation).

For example, the transmission delay of the first transmission path may be represented by using round-trip time *RTT* (*t*) that is of transmitting a packet through the first transmission path and that is detected in a current detection period t. Further, that the transmission delay of the first transmission path is greater than the first delay threshold may specifically include: $RTT \left(t\right) > {RTT}_{thres}$

*RTTₜₕᵣₑₛ* is the first delay threshold set based on an actual application scenario.

Further, S502 may include: When determining that the transmission delay of the first transmission path satisfies the foregoing formula (1), the terminal device 301 sends the service data through the first transmission path and the second transmission path.

In a possible design, when the service data is switched from being sent in the multipath transmission manner to being sent in the single-path transmission manner, quality of service of a service may be reduced, thereby affecting user experience. Therefore, in this embodiment of this application, the terminal device 3011 may switch from multipath transmission to single-path transmission in a conservative manner.

Based on the foregoing consideration, in this design, the method may further include:

The terminal device 301 determines a value of the first delay threshold based on a current manner of transmitting the service data.

A value of the first delay threshold determined by the terminal device 301 when the current manner of transmitting the service data is multipath transmission is less than a value of the first delay threshold determined by the terminal device 301 when the current manner of transmitting the service data is single-path transmission.

In this way, difficulty of switching by the terminal device 3011 from multipath transmission to single-path transmission can be increased. This avoids a case in which quality of service of a service is reduced.

For example, if the terminal device 301 sends the service data in the multipath transmission manner when detecting the transmission performance of the first transmission path (that is, S501), unless the transmission delay of the first transmission path is extremely small (that is, needs to be less than the first delay threshold with a small value), the terminal device 301 can determine, based on the content of Implementation 1, that the first transmission path does not meet the preset condition, and then switches from the multipath transmission manner to the single-path transmission manner to transmit the service data (that is, sends the service data through the first transmission path). If the transmission delay of the first transmission path is not extremely small, the terminal device 301 continues to send the service data in the multipath transmission manner (that is, sends the service data through the first transmission path and the second transmission path).

For another example, if the terminal device 301 sends the service data in the single-path transmission manner when detecting the transmission performance of the first transmission path (that is, S501), the terminal device 301 may determine whether the transmission delay of the first transmission path is greater than the first delay threshold with a large value (for example, the first delay threshold may be determined based on an actual service requirement), to determine whether the first transmission path meets the condition in Implementation 1. If the condition in Implementation 1 is met, the terminal device 301 continues to determine whether the first transmission path meets another condition in the preset condition. Finally, after determining that the first transmission path meets all the conditions in the preset condition, the terminal device 301 switches to the multipath transmission manner to send the service data (that is, send the service data through the first transmission path and the second transmission path).

In Implementation 2, the preset condition may include: A difference between the transmission delay of the first transmission path and a minimum transmission delay of the first transmission path within a preset time period is greater than a second delay threshold.

For example, when the transmission delay of the first transmission path is represented by using round-trip time *RTT*(*t*) that is of transmitting a packet through the first transmission path and that is detected in a current detection period t, that the difference between the transmission delay of the first transmission path and the minimum transmission delay of the first transmission path within the preset time period is greater than the second delay threshold may specifically include: $RTT \left(t\right) - {RTT}_{min} > Δ {RTT}_{thres}$

*RTT*ₘᵢₙ represents the minimum transmission delay of the first transmission path within the preset time period. For example, the terminal device 301 may record transmission delays detected in a plurality of detection periods in a recent time period (that is, the preset time period) by using S5011 to S5013, and select a minimum value of the transmission delays separately detected in the plurality of detection periods as *RTT*ₘᵢₙ . Δ*RTTₜₕᵣₑₛ* is the second delay threshold set based on an actual application scenario.

Further, S502 may include: When determining that the transmission delay of the first transmission path satisfies the foregoing formula (2), the terminal device 301 sends the service data through the first transmission path and the second transmission path.

In Implementation 3, the preset condition may include: The transmission delay of the first transmission path tends to deteriorate.

In a possible design, that the transmission delay of the first transmission path tends to deteriorate may specifically include: A change gradient of the transmission delay of the first transmission path in n consecutive detection periods is a positive gradient, where n is a positive integer.

Specifically, that the change gradient of the transmission delay of the first transmission path in the n consecutive detection periods is the positive gradient may be represented as follows: $sgn \left({\sum }_{i = t - \left(n-1\right)}^{i = t} sgn \left(\frac{RTT \left(i\right) - RTT \left(i-1\right)}{Δ i}\right) - n\right) = 0$

*RTT*(*i*) represents a transmission delay of the first transmission path in an *i*^{th} detection period, when *i = t, RTT* (*t*) represents a transmission delay of the first transmission path in a current detection period, and when *i = t -* (*n -* 1)*, RTT*(*t -* (*n -*1)) represents a transmission delay of the first transmission path in an (*n* - 1) ^{th} detection period before the current detection period. $\frac{RTT \left(i\right) - RTT \left(i-1\right)}{Δ i}$ represents a change gradient of the transmission delay of the first transmission path in a detection period corresponding to a moment *i*. sgn is a sign function. For example, when $\frac{RTT \left(i\right) - RTT \left(i-1\right)}{Δ i} > 0 , sgn \left(\frac{RTT \left(i\right) - RTT \left(i-1\right)}{Δ i}\right)$ is 1; when $\frac{RTT \left(i\right) - RTT \left(i-1\right)}{Δ i} < 0 , sgn \left(\frac{RTT \left(i\right) - RTT \left(i-1\right)}{Δ i}\right)$ is -1; and when $\frac{RTT \left(i\right) - RTT \left(i-1\right)}{Δ i} = 0 , sgn \left(\frac{RTT \left(i\right) - RTT \left(i-1\right)}{Δ i}\right)$ is 0.

Further, S502 may include: When determining that the transmission delay of the first transmission path satisfies the foregoing formula (3), the terminal device 301 sends the service data through the first transmission path and the second transmission path.

In another possible design, that the transmission delay of the first transmission path tends to deteriorate may specifically include: The change gradient of the transmission delay of the first transmission path in the n consecutive detection periods is the positive gradient and the change gradient of the transmission delay of the first transmission path in the n consecutive detection periods is greater than a gradient threshold.

Specifically, that the change gradient of the transmission delay of the first transmission path in the n consecutive detection periods is the positive gradient, and the change gradient of the transmission delay of the first transmission path in the n consecutive detection periods is greater than the gradient threshold may be represented as follows: $\frac{RTT \left(t\right) - RTT \left(t-1\right)}{Δ t} > \frac{RTT \left(t-1\right) - RTT \left(t-2\right)}{Δ t} > … > \frac{RTT \left(t-\left(n-2\right)\right) - RTT \left(t-\left(n-1\right)\right)}{Δ t} > \frac{Δ {RTT}_{thres}}{Δ t}$

*RTT*(*i*) represents a transmission delay of the first transmission path in an *i*^{th} detection period, when *i = t, RTT* (*t*) represents a transmission delay of the first transmission path in a current detection period, and when *i = t -* (*n -* 1)*, RTT*(*t -*(*n -*1)) represents a transmission delay of the first transmission path in an (*n* - 1)^{th} detection period before the current detection period. $\frac{Δ {RTT}_{thres}}{Δ t}$ is the gradient threshold set based on an actual application scenario.

Further, S502 may include: When determining that the transmission delay of the first transmission path satisfies the foregoing formula (4), the terminal device 301 sends the service data through the first transmission path and the second transmission path.

In the foregoing Implementations 1 to 3, content of the preset condition in S502 and S503 is described by using examples in which the transmission delay of the first transmission path is used as a determining basis. In addition, the preset condition may further include content in which the RSSI corresponding to the first transmission path is used as a determining basis. Details are as follows:

In Implementation 4, the preset condition may include: The RSSI of the first transmission path is less than a signal strength threshold (referred to as a "first signal strength threshold" below for ease of differentiation).

For example, that the RSSI of the first transmission path is less than the first signal strength threshold may specifically include: $RSSI \left(t\right) < {RSSI}_{thres}$

*RSSI (t)* represents an RSSI that is of the first transmission path and that is detected in a current detection period t, and *RSSIₜₕᵣₑₛ* is the first signal strength threshold set based on an actual application scenario.

Further, S502 may include: When determining that the RSSI of the first transmission path satisfies the foregoing formula (5), the terminal device 301 sends the service data through the first transmission path and the second transmission path.

In a possible design, similar to the foregoing content of determining the value of the first delay threshold, the method may further include:

The terminal device 301 determines a value of the first signal strength threshold based on a current manner of transmitting the service data.

A value of the first signal strength threshold determined by the terminal device 301 when the current manner of transmitting the service data is multipath transmission is greater than a value of the first signal strength threshold determined by the terminal device 301 when the current manner of transmitting the service data is single-path transmission.

In this way, difficulty of switching by the terminal device 3011 from multipath transmission to single-path transmission can be increased. This avoids a case in which quality of service of a service is reduced.

In Implementation 5, the preset condition may include: A difference between the RSSI of the first transmission path and a minimum RSSI of the first transmission path within a preset time period is greater than a second signal strength threshold.

For example, that the difference between the RSSI of the first transmission path and the minimum RSSI of the first transmission path within the preset time period is greater than the second signal strength threshold may specifically include: $RSSI \left(t\right) - {RSSI}_{min} > Δ {RSSI}_{thres}$

*RSSI*ₘᵢₙ represents the minimum RSSI of the first transmission path within the preset time period. For example, the terminal device 301 may record RSSIs detected in a plurality of detection periods in a recent time period (that is, the preset time period) by using S5014, and select a minimum value of the RSSIs separately detected in the plurality of detection periods as *RSSI*ₘᵢₙ. Δ*RSSIₜₕᵣₑₛ* is the second signal strength threshold set based on an actual application scenario.

Further, S502 may include: When determining that the RSSI of the first transmission path satisfies the foregoing formula (6), the terminal device 301 sends the service data through the first transmission path and the second transmission path.

In Implementation 6, the preset condition may include: The RSSI of the first transmission path tends to deteriorate.

In a possible design, that the RSSI of the first transmission path tends to deteriorate may specifically include: A change gradient of the RSSI of the first transmission path in k consecutive detection periods is a positive gradient, where k is a positive integer.

Specifically, that the change gradient of the RSSI of the first transmission path in the k consecutive detection periods is the positive gradient may be represented as follows: $sgn \left({\sum }_{i = t - \left(k-1\right)}^{i = t} sgn \left(\frac{RSSI \left(i\right) - RSSI \left(i-1\right)}{Δ i}\right) - k\right) = 0$

*RSSI*(*i*) represents an RSSI of the first transmission path in an *i*^{th} detection period, when *i = t , RSSI* (*t*) represents an RSSI of the first transmission path in a current detection period, and when *i = t -* (*k -* 1)*, RSSI* (*t -* (*k -* 1)) represents an RSSI of the first transmission path in a (*k* - 1)^{th} detection period before the current detection period. $\frac{RSSI \left(i\right) - RSSI \left(i-1\right)}{Δ i}$ represents a change gradient of the RSSI of the first transmission path in a detection period corresponding to a moment *i*. sgn is a sign function.

Further, S502 may include: When determining that the RSSI of the first transmission path satisfies the foregoing formula (7), the terminal device 301 sends the service data through the first transmission path and the second transmission path.

In another possible design, that the RSSI of the first transmission path tends to deteriorate may specifically include: The change gradient of the RSSI of the first transmission path in the k consecutive detection periods is the positive gradient, and the change gradient of the RSSI of the first transmission path in the k consecutive detection periods is greater than a gradient threshold.

Specifically, that the change gradient of the RSSI of the first transmission path in the k consecutive detection periods is the positive gradient, and the change gradient of the RSSI of the first transmission path in the k consecutive detection periods is greater than the gradient threshold may be represented as follows: $\frac{RSSI \left(t\right) - RSSI \left(t-1\right)}{Δ t} > \frac{RSSI \left(t-1\right) - RSSI \left(t-2\right)}{Δ t} > … > \frac{RSSI \left(t-\left(n-2\right)\right) - RSSI \left(t-\left(n-1\right)\right)}{Δ t} > \frac{Δ {RSSI}_{thres}}{Δ t}$

*RSSI (i)* represents an RSSI of the first transmission path in an *i* ^{th} detection period, when *i = t , RSSI* (*t*) represents an RSSI of the first transmission path in a current detection period, and when *i = t -* (*k -*1)*, RSSI* (*t* - (*k -* 1)) represents an RSSI of the first transmission path in a *(k* - 1) ^{th} detection period before the current detection period. $\frac{Δ {RSSI}_{thres}}{Δ t}$ is the gradient threshold set based on an actual application scenario.

Further, S502 may include: When determining that the RSSI of the first transmission path satisfies the foregoing formula (8), the terminal device 301 sends the service data through the first transmission path and the second transmission path.

In the foregoing Implementations 4 to 6, the content of the preset condition in S502 and S503 is described by using an example in which the RSSI of the first transmission path is used as a determining basis. In addition, the preset condition may further include content in which the packet loss rate corresponding to the first transmission path is used as a determining basis. Details are as follows:

In Implementation 7, the preset condition may include: The packet loss rate of the first transmission path is greater than a packet loss rate threshold.

Further, S502 may include: When determining that the packet loss rate of the first transmission path is greater than the packet loss rate threshold, the terminal device 301 sends the service data through the first transmission path and the second transmission path.

For example, after detecting the packet loss rate of the first transmission path by using S5011 to S5013, the terminal device 301 may compare the packet loss rate with the packet loss rate threshold, to determine whether the packet loss rate of the first transmission path is greater than the packet loss rate threshold. If the packet loss rate of the first transmission path is greater than the packet loss rate threshold, the terminal device 301 determines that the transmission performance of the first transmission path meets the preset condition, and then performs S502.

In Implementation 7, once a packet is lost in a data transmission process, it indicates that experience of an application has lost. Therefore, when the packet loss rate of the first transmission path is used as a determining basis, a gradient change may not be considered, and whether the multipath transmission manner or the single-path transmission manner is used for transmission (that is, whether S502 or S503 is performed is determined) is directly determined based on whether the packet loss rate exceeds the packet loss rate threshold. In this way, user experience of the application can be ensured.

In a possible design, similar to the content of determining the value of the first delay threshold and the content of determining the value of the first signal strength threshold, the method may further include:

The terminal device 301 determines a value of the packet loss rate threshold based on a current manner of transmitting the service data.

A value of the first signal strength threshold determined by the terminal device 301 when the current manner of transmitting the service data is multipath transmission is less than a value of the first signal strength threshold determined by the terminal device 301 when the current manner of transmitting the service data is single-path transmission.

In this way, difficulty of switching by the terminal device 3011 from multipath transmission to single-path transmission can be increased. This avoids a case in which quality of service of a service is reduced.

It may be understood that the foregoing Implementations 1 to 7 respectively describe seven conditions that may be included in the preset condition. In an actual application process, all or some of the foregoing seven conditions may be selected as content of the preset condition.

In an implementation, in the method provided in this embodiment of this application, the preset condition may include all the seven conditions in Implementations 1 to 7. In this case, when determining that the transmission performance of the first transmission path meets any one of the seven conditions in the preset condition, the terminal device 301 performs transmission in the multipath transmission manner (that is, S502). When determining the transmission performance of the first transmission path meets none of the seven conditions in the preset condition, the terminal device 301 performs transmission in the single-path transmission manner (that is, S503).

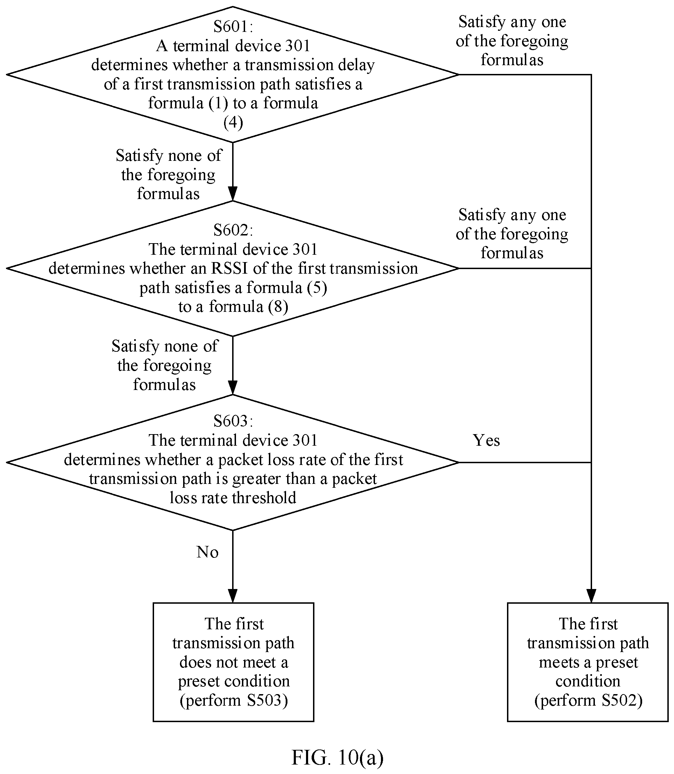

Further, as shown in FIG. 10(a), a process in which the terminal device 301 determines whether the transmission performance of the first transmission path meets the preset condition includes the following S601 to S603.

S601: The terminal device 301 determines, based on the transmission delay of the first transmission path, whether the transmission delay of the first transmission path satisfies the formula (1) to the formula (4).

When determining that the transmission delay of the first transmission path satisfies any one of the formula (1) to the formula (4), the terminal device 301 determines that the transmission performance of the first transmission path meets the preset condition, and further performs S502 of sending the service data through the first transmission path and the second transmission path.

When determining that the transmission delay of the first transmission path satisfies none of the formula (1) to the formula (4), that is, determining that the transmission performance of the first transmission path does not meet the preset condition, the terminal device 301 performs S602.

S602: The terminal device 301 determines, based on the RSSI of the first transmission path, whether the RSSI of the first transmission path satisfies the formula (5) to the formula (8).

When determining that the RSSI of the first transmission path satisfies any one of the formula (5) to the formula (8), the terminal device 301 determines that the transmission performance of the first transmission path meets the preset condition, and further performs S502 of sending the service data through the first transmission path and the second transmission path.

When determining that the RSSI of the first transmission path satisfies none of the formula (5) to the formula (8), that is, determining that the transmission performance of the first transmission path does not meet the preset condition, the terminal device 301 performs S603.

S603: The terminal device 301 determines, based on the packet loss rate of the first transmission path, whether the packet loss rate of the first transmission path is greater than the packet loss rate threshold.

When determining that the packet loss rate of the first transmission path is greater than the packet loss rate threshold, the terminal device 301 determines that the transmission performance of the first transmission path meets the preset condition, and further performs S502 of sending the service data through the first transmission path and the second transmission path.

When determining that the packet loss rate of the first transmission path is not greater than (that is, less than or equal to) the packet loss rate threshold, the terminal device 301 determines that the transmission performance of the first transmission path does not meet the preset condition, and further performs S503 of sending the service data through the first transmission path.

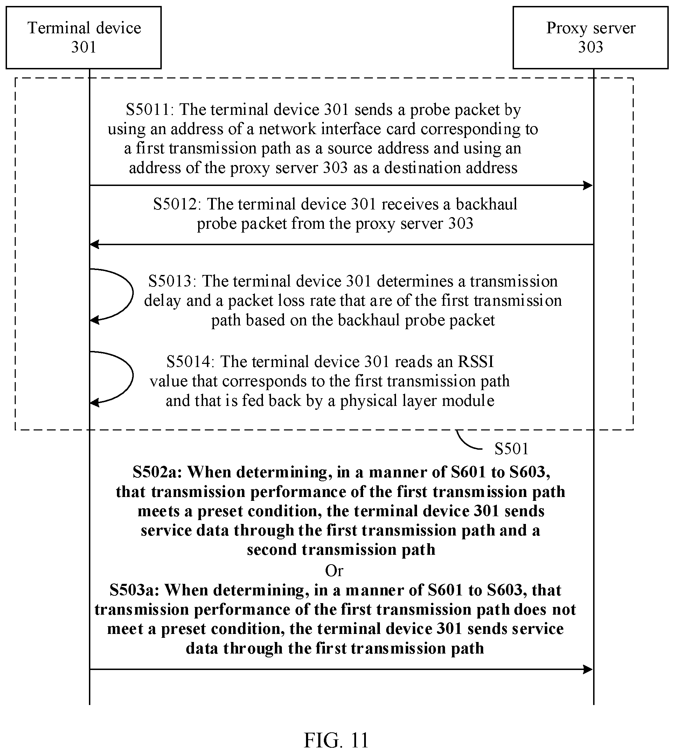

Further, as shown in FIG. 11, S502 may include:
When determining, in the manner of S601 to S603, that the transmission performance of the first transmission path meets the preset condition, the terminal device 301 sends the service data through the first transmission path and the second transmission path (that is, S502a in FIG. 11).

S503 may include:
When determining, in the manner of S601 to S603, that the transmission performance of the first transmission path does not meet the preset condition, the terminal device 301 sends the service data through the first transmission path (that is, S503a in FIG. 11).

In a possible design, when currently sending the service data through the first transmission path, the terminal device 301 may determine, by performing a process in FIG. 10(a), whether to subsequently send the service data through the first transmission path and the second transmission path or send the service data through the first transmission path.

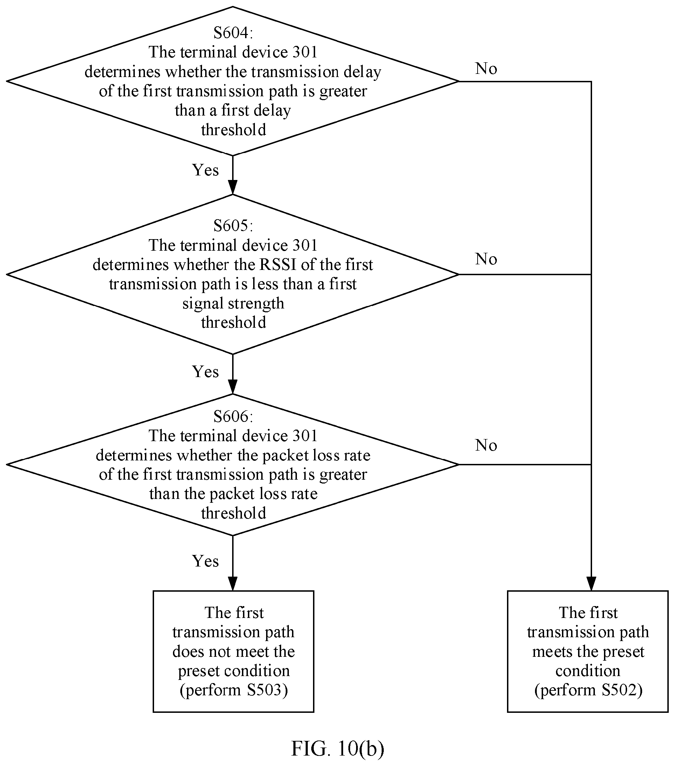

In addition, when currently sending the service data through the first transmission path and the second transmission path, the terminal device 301 may determine, by performing a process in FIG. 10(b), whether to subsequently send the service data through the first transmission path and the second transmission path or send the service data through the first transmission path. Specifically, as shown in FIG. 10(b), the method may further include the following steps:

S604: The terminal device 301 determines, based on the transmission delay of the first transmission path, whether the transmission delay of the first transmission path is greater than the first delay threshold.

If the transmission delay of the first transmission path is greater than the first delay threshold, it is determined that the transmission performance of the first transmission path meets the preset condition, and then S502 is performed to send the service data through the first transmission path and the second transmission path. If the transmission delay of the first transmission path is less than or equal to the first delay threshold, S605 is performed.

S605: The terminal device 301 determines, based on the RSSI of the first transmission path, whether the RSSI of the first transmission path is less than the first signal strength threshold.

If the RSSI of the first transmission path is less than the first signal strength threshold, it is determined that the transmission performance of the first transmission path meets the preset condition, and then S502 is performed to send the service data through the first transmission path and the second transmission path. If the RSSI of the first transmission path is greater than or equal to the first signal strength threshold, S606 is performed.

S606: The terminal device 301 determines, based on the packet loss rate of the first transmission path, whether the packet loss rate of the first transmission path is greater than the packet loss rate threshold.

If the packet loss rate of the first transmission path is greater than a second packet loss rate threshold, it is determined that the transmission performance of the first transmission path meets the preset condition, and then S502 is performed to send the service data through the first transmission path and the second transmission path. If the packet loss rate of the first transmission path is less than or equal to the second packet loss rate threshold, it is determined that the transmission performance of the first transmission path does not meet the preset condition, and then S503 is performed to send the service data through the first transmission path.

The following describes in detail a process in which the terminal device 301 sends the service data through the first transmission path and the second transmission path in this embodiment of this application.

In a process of sending the service data through the first transmission path and the second transmission path, in this embodiment of this application, when a redundant transmission mode (that is, a data packet in the service data is duplicated into two copies, and the two copies are sent through the first transmission path and the second transmission path respectively) in a related technology is used, if a difference between transmission delays of the two transmission paths is large, redundant data may be invalidly transmitted.

For example, FIG. 12 is a diagram of performing multipath transmission in a common state in the redundant transmission mode in the related technology. The terminal device 301 sequentially duplicates data packets in the service data into two copies, and respectively sends the two copies through the first transmission path and the second transmission path (for ease of understanding, for example, between the terminal device 301 and the proxy server 303, a bold line arrow represents a process of transmitting a data packet through the first transmission path in the figure, and a thin line arrow represents a process of transmitting a data packet through the first transmission path). After receiving data packets from the terminal device 301, the proxy server 303 may deduplicate a repeatedly received data packet, and send only one data packet to the service server 302, so that the service server 302 does not receive a repeated data packet.

When a packet is lost between the terminal device 301 and the proxy server 303 (an example in which a data packet 2 is lost on the first transmission path is used in FIG. 12), the proxy server 303 may still receive a data packet 2 through the other transmission path, to ensure that the service server 302 can normally receive data.

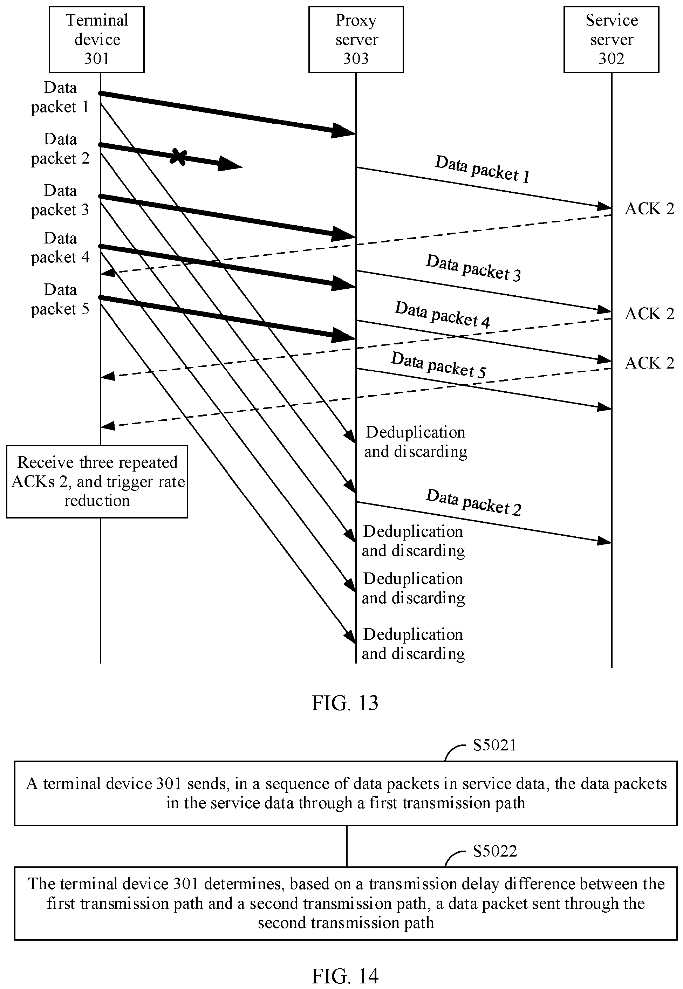

However, when a difference between transmission delays of the two transmission paths is large, if multipath transmission is performed in the redundant transmission mode in the related technology, a case is shown in FIG. 13. In FIG. 13, a transmission delay of the first transmission path is less than a transmission delay of the second transmission path, and a data packet 2 is lost on the first transmission path. In this case, the proxy server 303 receives a data packet 1, a data packet 3, a data packet 4, and a data packet 5 through the first transmission path, and sends the data packet 1, the data packet 3, the data packet 4, and the data packet 5 to the service server 302.

After receiving the data packets, the service server 302 feeds back acknowledgement (acknowledgement, ACK) packets to the terminal device 301, where the ACK packet carries a sequence number of a data packet that the service server 302 expects to receive. Specifically, after receiving the data packet 1, the service server 302 feeds back, to the terminal device 301, an ACK packet (ACK 2 for short) that carries a sequence number of the data packet 2. In addition, because the service server 302 does not receive the data packet 2, the service server 302 still feeds back an ACK 2 after receiving subsequent data packets (for example, the data packet 3 and the data packet 4). (It should be noted that, in FIG. 12, to simplify solution content, a process in which the service server 302 sends ACK packets to the terminal device 301 is not described, and it may be understood that, in FIG. 12, the service server 302 may also send ACK packets to the terminal device 301 in the foregoing manner).

Then, as shown in FIG. 13, after receiving three ACKs 2, the terminal device 301 triggers rate reduction transmission based on a congestion control solution in a related transmission protocol (for example, a TCP protocol). In this way, even if the proxy server 303 receives the data packet 2 through the second transmission path and sends the data packet 2 to the service server 302 in a subsequent process, a terminal device 301 side has started to perform rate reduction transmission. Therefore, data transmission efficiency is reduced. (In addition, when receiving the data packet 1, the data packet 3, the data packet 4, and the data packet 5 through the second transmission path, the proxy server 303 may discard these data packets through deduplication processing, and does not need to send these data packets to the proxy server 302 again.)

For the foregoing problem, in the method provided in this embodiment of this application, in a process of sending the service data through the first transmission path and the second transmission path, as shown in FIG. 14, the terminal device 301 may send, in a sequence of data packets in the service data, the data packets in the service data through the first transmission path (that is, S5021). In addition, when sending the service data through the second transmission path, the terminal device 301 may determine, based on a transmission delay difference between the first transmission path and the second transmission path, a data packet sent through the second transmission path (that is, S5022), and then send the data packet through the second transmission path. In this way, a possibility that redundant data is invalidly transmitted due to the transmission delay difference between the two transmission paths can be reduced.

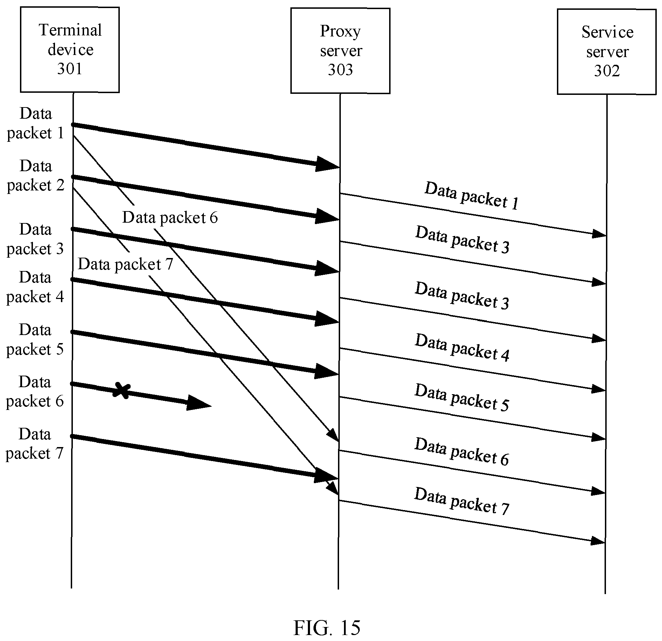

For example, as shown in FIG. 15, the terminal device 301 sends, in a sequence of data packets in the service data (that is, a data packet 1, a data packet 2, ...), the data packets in the service data through the first transmission path. In addition, the terminal device 301 determines, based on the transmission delay difference between the first transmission path and the second transmission path, that the transmission delay of the first transmission path is less than the transmission delay of the second transmission path. Further, the terminal device 301 may determine, based on the transmission delay difference, to send a data packet (for example, a data packet 6) after the data packet 1 through the second transmission path. Then, when the data packet 6 reaches the proxy server 303 through the second transmission path after a long transmission delay, if a data packet 6 is lost on the first transmission path, the service server 303 may send the data packet 6 through the second transmission path to the service server 302. In this way, a possibility that redundant data is invalidly transmitted due to the transmission delay difference between the two transmission paths can be reduced.

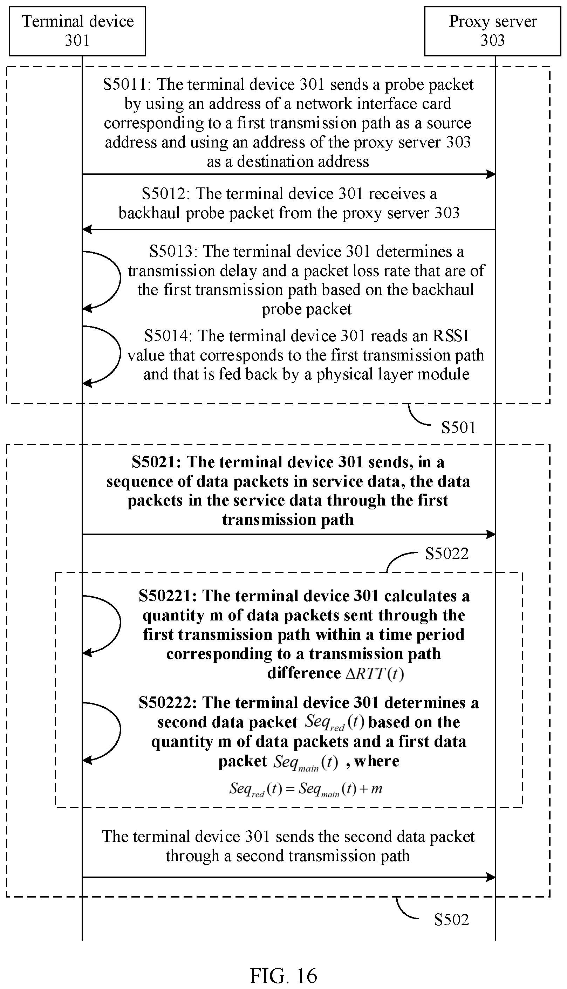

With reference to an example, the following describes in detail an implementation process in which the terminal device 301 sends the service data through the first transmission path and the second transmission path in this embodiment of this application. As shown in FIG. 16, the method provided in this embodiment of this application may further include the following steps:
S5021: The terminal device 301 sends, in a sequence of data packets in the service data, the data packets in the service data through the first transmission path.

For example, when the data packets in the service data are encapsulated by using TCP/UDP packets, as shown in FIG. 4, FIG. 5A, and FIG. 5B, after the packet interception module 30121 in the terminal device 301 sends the intercepted data packets to the scheduling module 30122, the scheduling module 30122 may encapsulate, in the sequence of the data packets in the service data, the data packets into the data packet UDP #1, and send the data packets to the proxy server 303.

S5022: The terminal device 301 determines, based on the transmission delay difference (referred to as a transmission delay difference Δ*RTT*(*t*) below) between the first transmission path and the second transmission path, a second data packet sent through the second transmission path.

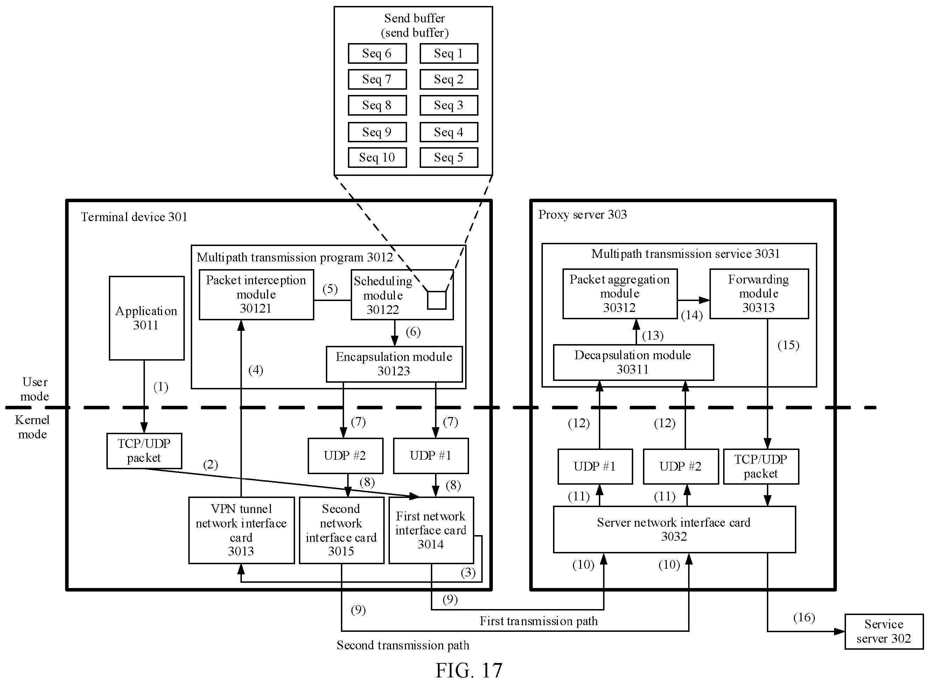

For example, content of S5022 may be performed by the scheduling module 30122 in the terminal device 301. Specifically, as shown in FIG. 17, in an actual application process, after receiving the data packets from the packet interception module 30121, the scheduling module 30122 may store the data packets in sequence (for example, store the data packets in a logical buffer "send buffer (send buffer)"). For example, in FIG. 17, the send buffer sequentially stores a data packet Seq 1 to a data packet Seq 10.

The scheduling module 30122 may encapsulate the data packets in the send buffer into the data packet UDP #1 in a sequence of the data packets in the service data, and send the data packets to the proxy server 303. In addition, the scheduling module 30122 determines, based on the transmission delay difference Δ*RTT*(*t*) , the second data packet sent through the second transmission path.

In an implementation, S5022 specifically includes the following S50221 and S50222:
S50221: When determining, based on the transmission delay difference Δ*RTT*(*t*) between the first transmission path and the second transmission path, that the transmission delay of the first transmission path is less than the transmission delay of the second transmission path, the terminal device 301 calculates a quantity m of data packets sent through the first transmission path within a time period corresponding to the transmission path difference Δ*RTT*(*t*)*.*

For example, the scheduling module 30122 may separately determine the transmission delay *RTTₘₐᵢₙ* (*t*) of the first transmission path and the transmission delay *RTT_{red}* (*t*) of the second transmission path based on the content of S5011 to S5013, and further, determine the transmission delay difference Δ*RTT*(*t*) between the first transmission path and the second transmission path according to the following formula (9): $Δ RTT \left(t\right) = {RTT}_{red} \left(t\right) - {RTT}_{main} \left(t\right)$

In addition, the scheduling module 30122 may determine, based on a current rate *rₘₐᵢₙ(t)* of sending a data packet through the first transmission path, the transmission delay difference Δ*RTT*(*t*) , and the following formula (10), the quantity m of data packets sent through the first transmission path within the time period corresponding to the transmission delay difference Δ*RTT*(*t*) : $m = {r}_{main} \left(t\right) \times Δ RTT \left(t\right)$

S50222: The terminal device 301 determines, based on the quantity m of data packets and a first data packet currently sent through the first transmission path, the second data packet sent through the second transmission path.

The second data packet is a data packet after m data packets of the first data packet.

For example, the scheduling module 30122 determines, based on the quantity m of data packets, the first data packet *Seqₘₐᵢₙ* (*t*) currently sent through the first transmission path, and the following formula (10), the second data packet *Seq_{red}*(*t*) sent through the second transmission path: ${Seq}_{red} \left(t\right) = {Seq}_{main} \left(t\right) + m$

Then, the scheduling module 30122 may invoke the encapsulation module 30123, so that when sending the first data packet *Seqₘₐᵢₙ*(*t*) through the first transmission path, the encapsulation module 30123 sends the second data packet *Seq_{red}*(*t*) through the second transmission path. In this way, time at which the proxy server 303 receives a second data packet *Seq_{red}*(*t*) through the second transmission path is close to time at which the proxy server 303 receives a second data packet *Seq_{red}*(*t*) through the first transmission path. In this case, if a second data packet *Seq_{red}*(*t*) is lost on one of the two transmission paths, a second data packet *Seq_{red}(t)* received on the other transmission path may be further used. Therefore, a possibility that redundant data is invalidly transmitted due to the transmission delay difference between the two transmission paths can be reduced.

In another implementation, when the transmission delay difference between the two transmission paths is small, even if there is an interval between time at which a same data packet arrives at the proxy server 303 through the two transmission paths, rate reduction transmission in a congestion control solution is not triggered. For example, when the transmission delay difference between the two transmission paths is less than a transmission interval corresponding to three data packets, rate reduction transmission in the TCP congestion control solution is not triggered. In this case, the scheduling module 30122 in the terminal device 301 may invoke the encapsulation module 30123 to simultaneously send a same data packet through the first transmission path and the second transmission path. In this way, an operation amount of the scheduling module 30122 can be reduced, and transmission efficiency can be improved.

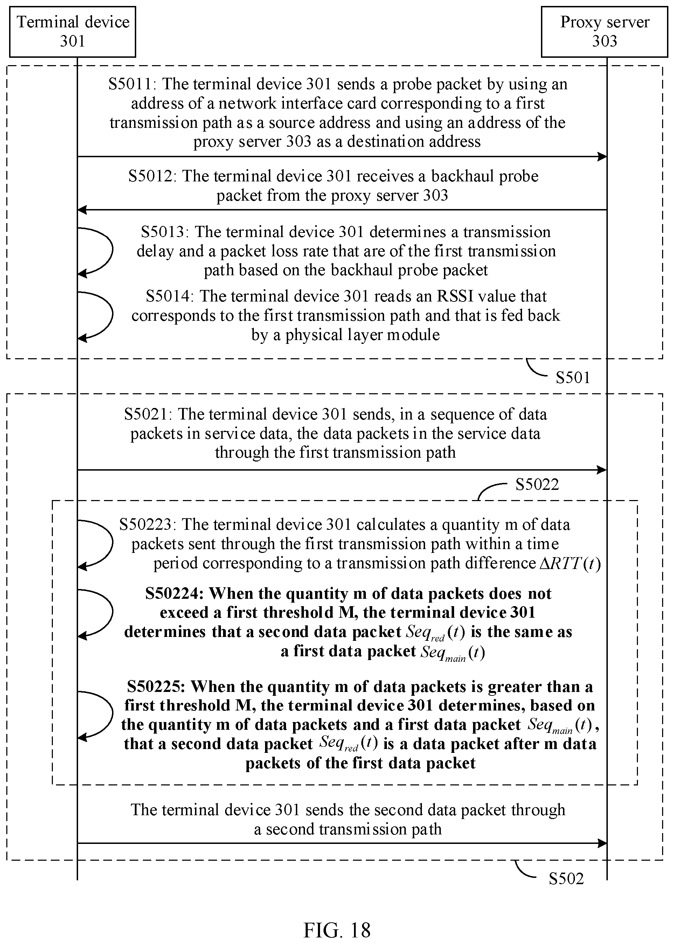

Specifically, as shown in FIG. 18, S5022 specifically includes the following S50223 to S50225:
S50223: When determining, based on the transmission delay difference Δ*RTT*(*t*) between the first transmission path and the second transmission path, that the transmission delay of the first transmission path is less than the transmission delay of the second transmission path, the terminal device 301 calculates the quantity m of data packets sent through the first transmission path within the time period corresponding to the transmission path difference Δ*RTT*(*t*).

For a specific implementation process of S50223, refer to the content of S50221. Details are not described herein again.

S50224: When the quantity m of data packets does not exceed a first threshold M, the terminal device 301 determines that the second data packet *Seq_{red}(t)* sent through the second transmission path is the same as the first data packet *Seqₘₐᵢₙ(t)* currently sent through the first transmission path.

A value of the first threshold M may be set based on an actual requirement.

In this case, the first data packet *Seqₘₐᵢₙ*(*t*) currently sent through the first transmission path and the second data packet *Seq_{red}(t)* currently sent through the second transmission path satisfy: ${Seq}_{red} \left(t\right) = {Seq}_{main} \left(t\right)$

For example, in this case, the scheduling module 30122 may invoke the encapsulation module 30123, so that the encapsulation module 30123 sends a same data packet through the first transmission path and the second transmission path.

S50225: When the quantity m of data packets is greater than a first threshold M, the terminal device 301 determines, based on the quantity m of data packets and the first data packet currently sent through the first transmission path, that the second data packet *Seq_{red}*(*t*) sent through the second transmission path is a data packet after m data packets of the first data packet *Seqₘₐᵢₙ(t) .*

In other words, when the quantity m of data packets is greater than the first threshold M, the data packet sent through the second transmission path may be determined in the manner in S50222. For a specific implementation process of S50225, refer to the content of S50222. Details are not described herein again.

In still another implementation, when a quantity of data packets buffered in the terminal device 301 is limited (for example, only 10 data packets can be buffered in the send buffer in FIG. 17), and a difference between the transmission delay of the second transmission path and the transmission delay of the first transmission path is large, a possibility that redundant data is invalidly transmitted may be reduced as much as possible by sending a last data packet in the send buffer through the second transmission path.

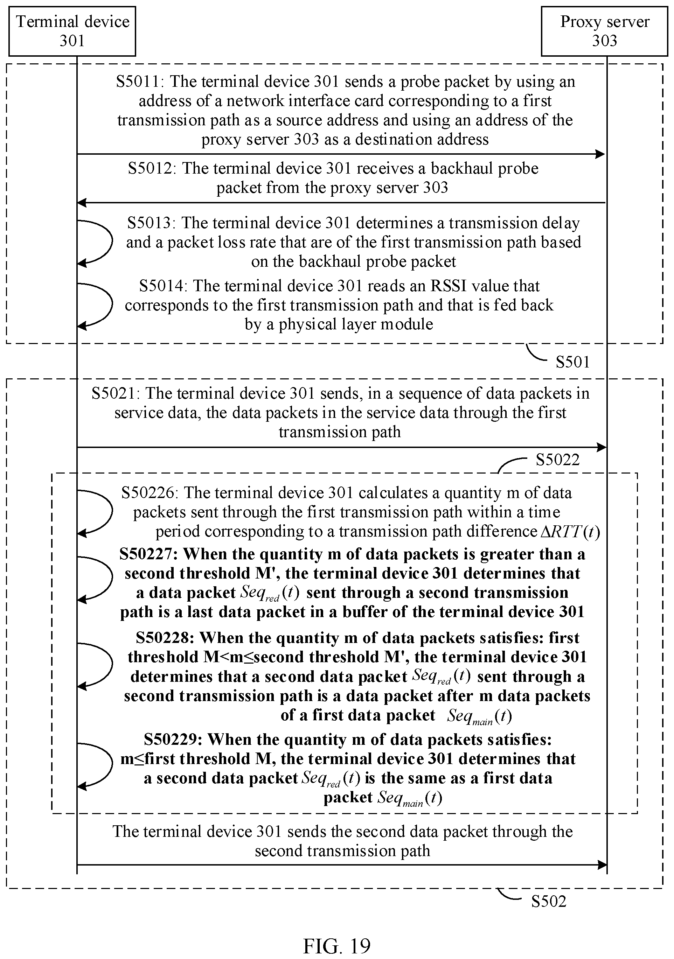

Specifically, as shown in FIG. 19, S5022 specifically includes the following S50226 to S50229:
S50226: When determining, based on the transmission delay difference Δ*RTT*(*t*) between the first transmission path and the second transmission path, that the transmission delay of the first transmission path is less than the transmission delay of the second transmission path, the terminal device 301 calculates the quantity m of data packets sent through the first transmission path within the time period corresponding to the transmission path difference Δ*RTT*(*t*).

For a specific implementation process of S50226, refer to the content of S50221. Details are not described herein again.

S50227: When the quantity m of data packets is greater than a second threshold M', the terminal device 301 determines that the data packet *Seq_{red}(t)* sent through the second transmission path is a last data packet in a buffer of the terminal device 301.

For example, in this case, the second data packet *Seq_{red}(t)* sent through the second transmission path satisfies: ${Seq}_{red} \left(t\right) = {Seq}_{thred} \left(t\right)$

*Seq_{thred}(t)* is the last data packet in the buffer of the terminal device 301, for example, *Seq_{thred}*(*t*) may be a last data packet in a send buffer of the scheduling module 30122.

A value of the second threshold M' may be set based on an actual requirement.

In addition, when the quantity m of data packets satisfies: m≤second threshold M', the data packet sent through the second transmission path may be determined with reference to the content of S50224 and S50225. Details are as follows.

S50228: When the quantity m of data packets satisfies: first threshold M<m≤second threshold M', the terminal device 301 determines, based on the quantity m of data packets and the first data packet *Seqₘₐᵢₙ*(*t*) currently sent through the first transmission path, that the second data packet *Seq_{red}(t)* sent through the second transmission path is a data packet after m data packets of the first data packet *Seqₘₐᵢₙ(t)* .

The first threshold M is less than the second threshold M'.

S50229: When the quantity m of data packets satisfies: m≤first threshold M, the terminal device 301 determines that the second data packet *Seq_{red}(t)* sent through the second transmission path is the same as the first data packet *Seqₘₐᵢₙ(t)* currently sent through the first transmission path.

For specific implementation processes of S50228 and S50229, refer to the foregoing content of S50224 and S50225. Details are not described herein again.

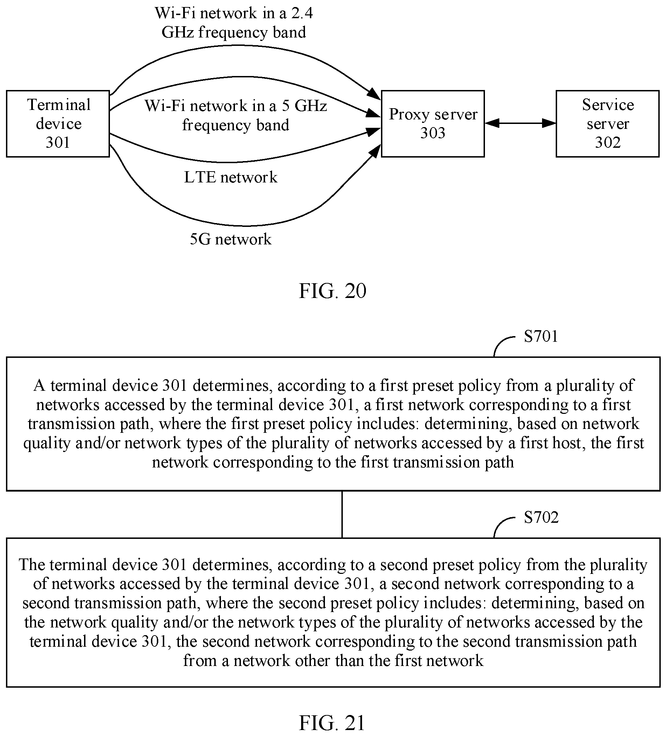

With reference to an example, the following describes in detail an implementation process in which the terminal device 301 sends the service data through one transmission path (that is, the first transmission path) (that is, S503) in this embodiment of this application. As shown in FIG. 20, the method provided in this embodiment of this application may further include the following steps:

S5031: The terminal device 301 sends the data packets in the service data through the first transmission path.

For example, when the data packets in the service data are encapsulated by using TCP/UDP packets, as shown in FIG. 4, FIG. 5A, and FIG. 5B, after the packet interception module 30121 in the terminal device 301 sends the intercepted data packets to the scheduling module 30122, the scheduling module 30122 may encapsulate, in the sequence of the data packets in the service data, the data packets into the data packet UDP #1, and send the data packets to the proxy server 303.

S5022: The terminal device 301 determines, based on the transmission delay difference (referred to as the transmission delay difference Δ*RTT*(*t*) below) between the first transmission path and the second transmission path, the second data packet sent through the second transmission path.

For example, content of S5022 may be performed by the scheduling module 30122 in the terminal device 301. Specifically, as shown in FIG. 17, in an actual application process, after receiving the data packets from the packet interception module 30121, the scheduling module 30122 may store the data packets in sequence (for example, store the data packets in a logical buffer "send buffer (send buffer)"). For example, in FIG. 17, the send buffer sequentially stores a data packet Seq 1 to a data packet Seq 10.

The scheduling module 30122 may encapsulate the data packets in the send buffer into the data packet UDP #1 in a sequence of the data packets in the service data, and send the data packets to the proxy server 303. In addition, the scheduling module 30122 determines, based on the transmission delay difference Δ*RTT*(*t*) , the second data packet sent through the second transmission path.

With reference to an example, the following describes an implementation process of determining, from a plurality of networks accessed by the terminal device 301, a network corresponding to the first transmission path and a network corresponding to the second transmission path in this embodiment of this application.

In an actual application process, the terminal device 301 may access networks of a plurality of standards. For example, as shown in FIG. 20, when the terminal device 301 supports both a Wi-Fi network in a 2.4 GHz frequency band and a Wi-Fi network in a 5 GHz frequency band, and the terminal device 301 has two cellular network interface cards (for example, one cellular network interface card is an LTE network interface card, and the other is a 5G network interface card) and has a dual-cellular concurrent data transmission capability, the terminal device 301 may access the Wi-Fi network in the 2.4 GHz frequency band, the Wi-Fi network in the 5 GHz frequency band, the LTE network, and the 5G network. Therefore, before the service data is transmitted according to the foregoing method in this embodiment of this application, the network corresponding to the first transmission path and the network corresponding to the second transmission path may be determined based on the following content of S701 and S702.

Specifically, as shown in FIG. 21, the method provided in this embodiment of this application may further include the following steps:

S701: The terminal device 301 determines, according to a first preset policy from the plurality of networks accessed by the terminal device 301, a first network corresponding to the first transmission path.

The first preset policy includes: determining, based on network quality and/or network types of the plurality of networks accessed by the first host, the first network corresponding to the first transmission path.

In an implementation, the first preset policy specifically includes: when it is determined, based on the network types of the plurality of networks accessed by the terminal device 301, that the plurality of networks accessed by the terminal device 301 include a Wi-Fi network and a cellular network, determining that the Wi-Fi network is the first network corresponding to the first transmission path.

In the foregoing implementation, compared with the cellular network, the Wi-Fi network usually has a more stable signal and a lower user tariff. Therefore, a transmission path in the Wi-Fi network is preferentially used as a primary path (that is, the first transmission path) for transmission of the service data, to improve data transmission performance and reduce user costs.

In a possible design, when the terminal device 301 accesses a plurality of Wi-Fi networks, a network with better performance may be selected, based on transmission performance of the plurality of Wi-Fi networks, as a network corresponding to the primary path. For a process in which the terminal device 301 detects the transmission performance of the plurality of Wi-Fi networks, refer to the content of S5011 to S5014.

In another implementation, the first preset policy further includes: when it is determined, based on the network types of the plurality of networks accessed by the terminal device 301, that the plurality of networks accessed by the terminal device 301 include cellular networks but do not include a Wi-Fi network, determining that a cellular network with optimal transmission performance in the plurality of cellular networks as the first network corresponding to the first transmission path.

For example, the terminal device 301 may detect transmission performance of the plurality of cellular networks with reference to the content of S5011 to S5014, and further determine, based on a detection result, that the cellular network with the optimal transmission performance in the plurality of cellular networks as the first network corresponding to the first transmission path.

S702: The terminal device 301 determines, according to a second preset policy from the plurality of networks accessed by the terminal device 301, a second network corresponding to the second transmission path.

The second preset policy includes: determining, based on the network quality and/or the network types of the plurality of networks accessed by the terminal device 301, the second network corresponding to the second transmission path from a network other than the first network.

In an implementation, the second preset policy specifically includes: when it is determined, based on the network types of the plurality of networks accessed by the terminal device 301, that the terminal device 301 accesses a plurality of Wi-Fi networks, determining a Wi-Fi network other than the first network in the plurality of Wi-Fi networks as the second network.

For example, when the terminal device 301 accesses a plurality of Wi-Fi networks:
if network quality of one of the plurality of Wi-Fi networks accessed by the terminal device 301 reaches a preset standard, the terminal device 301 selects the Wi-Fi network as the first network, and selects another Wi-Fi network as the second network.

If network quality of Wi-Fi networks in the plurality of Wi-Fi networks accessed by the terminal device 301 reaches the preset standard, the terminal device 301 selects a Wi-Fi network with optimal network quality as the first network (or randomly selects a Wi-Fi network whose network quality reaches the preset standard as the first network), and selects another Wi-Fi network whose network quality reaches the preset standard (which may be a Wi-Fi network with second highest network quality, or may be randomly selected) as the second network.

In addition, in an implementation, when the network quality of the Wi-Fi networks accessed by the terminal device 301 does not meet the preset standard, the second preset policy may further include:
when it is determined, based on the network types of the plurality of networks accessed by the terminal device 301, that the networks accessed by the terminal device 301 include a Wi-Fi network and a cellular network, and the network quality of none of the Wi-Fi networks accessed by the terminal device 301 meets the preset standard, determining the cellular network as the second network.

In one aspect, when cellular networks accessed by the terminal device 301 include a cellular network whose network quality meets the preset standard, the cellular network is determined as the second network.

In another aspect, when the cellular networks accessed by the terminal device 301 include a plurality of cellular networks whose network quality meets the preset standard, a cellular network with optimal network quality is selected as the second network (or a cellular network whose network quality meets the preset standard may be randomly selected as the second network).

In still another aspect, when the cellular networks accessed by the terminal device 301 include a plurality of cellular networks whose network quality does not meet the preset criterion, a network that is in the plurality of cellular networks and whose network quality is complementary to the network quality of the first network is selected as the second network.

It may be understood that, after the network corresponding to the first transmission path and the network corresponding to the second transmission path are determined from the plurality of networks accessed by the terminal device 301 by using the content of S701 and S702, for a process in which the terminal device 301 sends the service data, refer to the content in FIG. 8 to FIG. 19. Details are not described herein.

In addition, it should be noted that, in the foregoing method in this embodiment of this application, the method is mainly described by using an example in which the terminal device 301 selects, based on the content of S501 to S503, to send the service data to the proxy server 303 through one transmission path or two transmission paths. In a specific implementation process, the terminal device 301 may also select, with reference to the content of S501 to S503, to send the service data to the proxy server 303 through one transmission path or a plurality of transmission paths (for example, three transmission paths or four transmission paths). In this case, the foregoing "second transmission path" may specifically include a plurality of transmission paths. In other words, in the foregoing method in this embodiment of this application, a quantity of transmission paths included in the "second transmission path" may not be limited.

In addition, in the foregoing method in this embodiment of this application, a process of transmitting the service data between the terminal device 301 and the proxy server 303 in the architecture shown in FIG. 3 is mainly used as an example for description. It may be understood that, in an actual application process, the foregoing method in this embodiment of this application may also be applied to a process of transmitting service data between a terminal device and a service server. For example, when the method in this embodiment of this application is applied to a process of transmitting the service data between the terminal device 201 and the service server 202 shown in FIG. 2, the terminal device 201 may select, based on the content of S501 to S503, whether to send the service data to the service data 202 in the single-path transmission manner or the multipath transmission manner. Further, when sending the service data to the service data 202 in the multipath transmission manner, the terminal device 201 may further send the service data based on the content of S5021 and S5022. In addition, the terminal device 201 may further determine, from a plurality of networks based on the content of S701 and S702, a network corresponding to a used transmission path. In other words, an application scenario of the foregoing method in this embodiment of this application is not limited to the architecture shown in FIG. 3.

The foregoing describes in detail the communication methods provided in embodiments with reference to FIG. 8 to FIG. 21. The following describes various apparatuses corresponding to the communication methods provided in the embodiments.

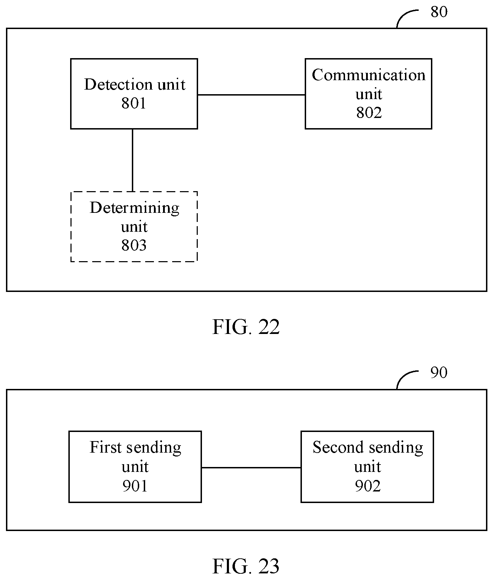

FIG. 22 is a diagram of a structure of a communication apparatus according to an embodiment. A communication apparatus 80 is used in a first host. The first host may be a software/hardware apparatus that supports multipath transmission. Specifically, the first host may include a device that supports multipath transmission, such as a cellular phone, a personal digital assistant (personal digital assistant, PDA), an augmented reality (augmented reality, AR)/virtual reality (virtual reality, VR) device, a tablet computer, or a notebook computer.

The communication apparatus 80 may be the first host, or may be a software/hardware module running on the first host.

When the first host is the host 101 in FIG. 8 or the terminal device 301 in FIG. 9 to FIG. 21, the communication apparatus 80 may be configured to perform all or some of the steps performed by the host 101 in FIG. 8 or the terminal device 301 in FIG. 9 to FIG. 21. Specifically, the communication apparatus 80 may include:
a detection unit 801, configured to: detect transmission performance of a first transmission path between the first host and a second host.

When the transmission performance of the first transmission path meets a preset condition, the communication unit 802 is configured to send service data through the first transmission path and a second transmission path, where the first transmission path and the second transmission path are transmission paths that are between the first host and a second host and that are in networks of different standards.

Alternatively, when the transmission performance of the first transmission path does not meet a preset condition, the communication unit 802 is configured to send service data through the first transmission path.

In an implementation, the transmission performance of the first transmission path includes one or more of a transmission delay, a packet loss rate, and a received signal strength indicator RSSI that are of the first transmission path.

In an implementation, the preset condition includes one or more of the following: The transmission delay of the first transmission path is greater than a first delay threshold, a difference between the transmission delay of the first transmission path and a minimum transmission delay of the first transmission path within a preset time period is greater than a second delay threshold, or the transmission delay of the first transmission path tends to deteriorate.

In an implementation, that the transmission delay of the first transmission path tends to deteriorate includes: A change gradient of the transmission delay of the first transmission path in n consecutive detection periods is a positive gradient, where n is a positive integer; and/or that the transmission delay of the first transmission path tends to deteriorate includes: The change gradient of the transmission delay of the first transmission path in the n consecutive detection periods is the positive gradient, and the change gradient of the transmission delay of the first transmission path in the n consecutive detection periods is greater than a gradient threshold.

In an implementation, the preset condition includes one or more of the following: The RSSI of the first transmission path is less than a first signal strength threshold, a difference between the RSSI of the first transmission path and a minimum RSSI of the first transmission path within a preset time period is greater than a second signal strength threshold, or the RSSI of the first transmission path tends to deteriorate.

In an implementation, that the RSSI of the first transmission path tends to deteriorate includes: A change gradient of the RSSI of the first transmission path in k consecutive detection periods is a positive gradient, where k is a positive integer; and/or that the RSSI of the first transmission path tends to deteriorate includes: The change gradient of the RSSI of the first transmission path in the k consecutive detection periods is the positive gradient, and the change gradient of the RSSI of the first transmission path in the k consecutive detection periods is greater than a gradient threshold.

In an implementation, the preset condition includes: The packet loss rate of the first transmission path is greater than a packet loss rate threshold.

In an implementation, that the communication unit 802 is configured to send the service data through the first transmission path and the second transmission path includes: The communication unit 802 is specifically configured to send, in a sequence of data packets in the service data, the data packets in the service data through the first transmission path.

The communication unit 802 is specifically configured to determine, by the first host based on a transmission delay difference between the first transmission path and the second transmission path, a data packet sent through the second transmission path.

In an implementation, that the communication unit 802 is specifically configured to determine, based on the transmission delay difference between the first transmission path and the second transmission path, the data packet sent through the second transmission path includes:

The communication unit 802 is specifically configured to: when determining, based on the transmission delay difference between the first transmission path and the second transmission path, that the transmission delay of the first transmission path is less than a transmission delay of the second transmission path, calculate a quantity m of data packets sent through the first transmission path within a time period corresponding to the transmission delay difference; and
the communication unit 802 is specifically configured to determine, based on the quantity m of data packets and a first data packet currently sent through the first transmission path, a second data packet sent through the second transmission path, where the second data packet is a data packet after m data packets of the first data packet.

In an implementation, that the communication unit 802 is specifically configured to determine, based on the transmission delay difference between the first transmission path and the second transmission path, the data packet sent through the second transmission path includes:

The communication unit 802 is specifically configured to: when determining, based on the transmission delay difference between the first transmission path and the second transmission path, that the transmission delay of the first transmission path is less than the transmission delay of the second transmission path, calculate the quantity m of data packets sent through the first transmission path within the time period corresponding to the transmission delay difference.

The communication unit 802 is specifically configured to: when the quantity m of data packets does not exceed a first threshold, determine that the second data packet sent through the second transmission path is the same as the first data packet currently sent through the first transmission path.

In an implementation, that the communication unit 802 is specifically configured to determine, based on the transmission delay difference between the first transmission path and the second transmission path, the data packet sent through the second transmission path includes:

The communication unit 802 is specifically configured to: when determining, based on the transmission delay difference between the first transmission path and the second transmission path, that the transmission delay of the first transmission path is less than the transmission delay of the second transmission path, calculate the quantity m of data packets sent through the first transmission path within the time period corresponding to the transmission delay difference.

The communication unit 802 is specifically configured to: when the quantity m of data packets is greater than a second threshold, determine that the data packet sent through the second transmission path is a last data packet in a buffer of the first host.

In an implementation, the communication apparatus 80 further includes:
a determining unit 803, configured to determine, according to a first preset policy, a first network corresponding to the first transmission path from a plurality of networks accessed by the first host, where the first preset policy includes determining, based on network quality and/or network types of the plurality of networks accessed by the first host, the first network corresponding to the first transmission path.

In an implementation, the first preset policy specifically includes: when it is determined, based on the network types of the plurality of networks accessed by the first host, that the plurality of networks accessed by the first host include a wireless fidelity Wi-Fi network and a cellular network, determining that the Wi-Fi network is the first network corresponding to the first transmission path.

In an implementation, the determining unit 803 is further configured to determine, according to a second preset policy, a second network corresponding to the second transmission path from the plurality of networks accessed by the first host, where the second preset policy includes: determining, based on the network quality and/or the network types of the plurality of networks accessed by the first host, the second network corresponding to the second transmission path from a network other than the first network.

FIG. 23 is a diagram of a structure of another communication apparatus according to an embodiment. A communication apparatus 90 is used in a first host. The first host may be a software/hardware apparatus that supports multipath transmission. Specifically, the first host may include a device that supports multipath transmission, such as a cellular phone, a personal digital assistant (personal digital assistant, PDA), an augmented reality (augmented reality, AR)/virtual reality (virtual reality, VR) device, a tablet computer, or a notebook computer.

The communication apparatus 90 may be the first host, or may be a software/hardware module running on the first host.

When the first host is the terminal device 301 in FIG. 14 to FIG. 19 in FIG. 8, the communication apparatus 90 may be configured to perform all or some of the steps performed by the terminal device 301 in FIG. 14 to FIG. 19. Specifically, the communication apparatus 90 may include:
a first sending unit 901, configured to send, in a sequence of data packets in service data, the data packets in the service data through a first transmission path; and
a second sending unit 902, configured to determine, based on a transmission delay difference between the first transmission path and a second transmission path, a data packet sent through the second transmission path, where the first transmission path and the second transmission path are transmission paths that are between the first host and the second host and that are in networks of different standards.

In an implementation, that the second sending unit 902 is configured to determine, based on the transmission delay difference between the first transmission path and the second transmission path, the data packet sent through the second transmission path includes:

The second sending unit 902 is specifically configured to: when determining, based on the transmission delay difference between the first transmission path and the second transmission path, that a transmission delay of the first transmission path is less than a transmission delay of the second transmission path, calculate a quantity m of data packets sent through the first transmission path within a time period corresponding to the transmission delay difference.

The second sending unit 902 is specifically configured to determine, based on the quantity m of data packets and a first data packet currently sent through the first transmission path, a second data packet sent through the second transmission path, where the second data packet is a data packet after m data packets of the first data packet.

In an implementation, that the second sending unit 902 is configured to determine, based on the transmission delay difference between the first transmission path and the second transmission path, the data packet sent through the second transmission path includes:

The second sending unit 902 is specifically configured to: when determining, based on the transmission delay difference between the first transmission path and the second transmission path, that the transmission delay of the first transmission path is less than the transmission delay of the second transmission path, calculate the quantity m of data packets sent through the first transmission path within the time period corresponding to the transmission delay difference.

The second sending unit 902 is specifically configured to: when the quantity m of data packets does not exceed a first threshold, determine that the second data packet sent through the second transmission path is the same as the first data packet currently sent through the first transmission path.

In an implementation, that the second sending unit 902 is configured to determine, based on the transmission delay difference between the first transmission path and the second transmission path, the data packet sent through the second transmission path includes:

The second sending unit 902 is specifically configured to: when determining, based on the transmission delay difference between the first transmission path and the second transmission path, that the transmission delay of the first transmission path is less than the transmission delay of the second transmission path, calculate the quantity m of data packets sent through the first transmission path within the time period corresponding to the transmission delay difference.

The second sending unit 902 is specifically configured to: when the quantity m of data packets is greater than a second threshold, determine that the data packet sent through the second transmission path is a last data packet in a buffer of the first host.

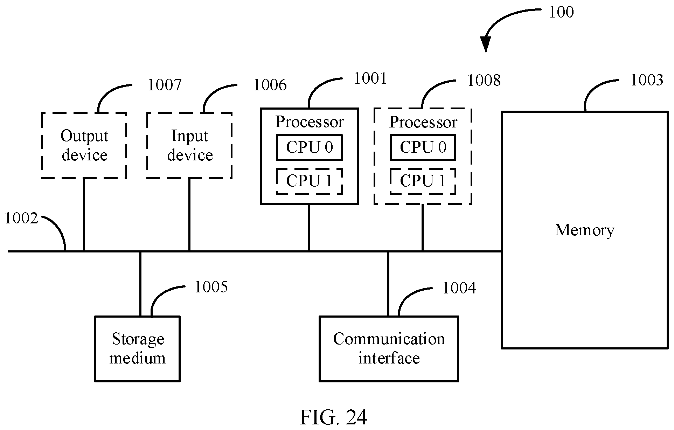

FIG. 24 is a diagram of a structure of another communication apparatus according to an embodiment. A communication apparatus 100 may be a chip or a system on chip. Specifically, the communication apparatus 100 may include all or a part of hardware in a device that supports multipath transmission, such as a cellular phone, a personal digital assistant (personal digital assistant, PDA), an augmented reality (augmented reality, AR)/virtual reality (virtual reality, VR) device, a tablet computer, or a notebook computer.

The communication apparatus 100 may include some or all components of a processor 1001, a communication line 1002, a memory 1003, and at least one communication interface 1004.

The processor 1001 is configured to perform all or some of the steps performed by the host 101 in FIG. 8 or the terminal device 301 in FIG. 9 to FIG. 21 in the embodiments.

Specifically, the processor 1001 may include a general-purpose central processing unit (central processing unit, CPU), and the processor 1001 may further include a microprocessor, a field programmable gate array (Field Programmable Gate Array, FPGA), a digital signal processor (digital signal processor, DSP) or an application-specific integrated circuit (application-specific integrated circuit, ASIC), another programmable logic device, a discrete gate or transistor logic device, a discrete hardware component, or the like.

During specific implementation, in an embodiment, the processor 1001 may include one or more CPUs such as a CPU 0 and a CPU 1 in FIG. 24.

During specific implementation, in an embodiment, the communication apparatus 100 may include a plurality of processors, for example, the processor 1001 and a processor 1008 in FIG. 24. Each of the processors may be a single-core (single-CPU) processor, or may be a multi-core (multi-CPU) processor. The processor herein may be one or more devices, circuits, and/or processing cores configured to process, for example, data (computer program instructions).

In addition, the memory 1003 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory 1003 may exist independently, and is connected to the processor 1001 through the communication line 1002. The memory 1003 may alternatively be integrated with the processor 1001.

The memory 1003 stores computer instructions. The processor 1001 may execute the computer instructions stored in the memory 1003, to perform all or some of the steps in the communication methods provided in the embodiments. As shown in FIG. 24, the computer instructions are stored in the memory 1003. The processor 1001 may execute the computer instructions stored in the memory 1003, to perform the communication methods provided in the embodiments.

Optionally, the computer-executable instructions in this embodiment may also be referred to as application code. This is not specifically limited in this embodiment.

In addition, the communication interface 1004 uses any apparatus such as a transceiver, and is configured to communicate with another device or a communication network, for example, the Ethernet, a radio access network (radio access network, RAN), or a wireless local area network (wireless local area network, WLAN).

In addition, the communication line 1002 is configured to connect components in the communication apparatus 100. Specifically, the communication line 1002 may include a data bus, a power bus, a control bus, a status signal bus, and the like. However, for clear description, various buses are marked as the communication line 1002 in the figure.

During specific implementation, in an embodiment, the data processing apparatus 100 may further include an output device 1007 and an input device 1006. The output device 1007 may communicate with the processor 1001, and may display information in a plurality of manners. For example, the output device 1007 may be a liquid crystal display (liquid crystal display, LCD), a light emitting diode (light emitting diode, LED) display device, a cathode ray tube (cathode ray tube, CRT) display device, a projector (projector), or the like. The input device 1006 may communicate with the processor 1001, and may receive input of a user in a plurality of manners. For example, the input device 1006 may be a mouse, a keyboard, a touchscreen device, a sensor device, or the like.

In addition, the communication apparatus 100 may further include a storage medium 1005. The storage medium 1005 is configured to store the computer instructions and various data for implementing the technical solutions of the embodiments. In this way, when performing the foregoing communication methods in the embodiments, the communication apparatus 100 loads the computer instructions and the various data that are stored in the storage medium 1005 to the memory 1003, to enable the processor 1001 to execute the computer instructions stored in the memory 1003, to perform the communication methods provided in the embodiments.

The method steps in the embodiments may be implemented in a hardware manner, or may be implemented by executing software instructions by the processor. The software instructions include corresponding software modules. The software modules may be stored in a RAM, a flash memory, a ROM, a PROM, an EPROM, an EEPROM, a register, a hard disk, a removable hard disk, a CD-ROM, or a storage medium of any other form known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in the communication apparatus. Certainly, the processor and the storage medium may exist in the communication apparatus as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, procedures or functions in embodiments of this application are all or partially executed. The computer may be a general-purpose computer, a dedicated computer, a computer network, a communication apparatus, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; may be an optical medium, for example, a digital video disc (digital video disc, DVD); or may be a semiconductor medium, for example, an SSD.

In embodiments, unless otherwise stated or there is a logic conflict, terms and/or descriptions in different implementations are consistent and may be mutually referenced, and technical features in different embodiments may be combined based on an internal logical relationship thereof, to form a new embodiment.

In embodiments, "at least one" means one or more, "a plurality of" means two or more, and other quantifiers are similar to the foregoing cases. The term "and/or" describes an association relationship between associated objects, and indicates that three relationships may exist. For example, A and/or B may indicate the following three cases: Only A exists, both A and B exist, and only B exists. In addition, an element (element) appearing in a singular form with "a", "an", or "the" does not mean "one or only one" unless otherwise specified in the context, but means "one or more than one". For example, "a device" means for one or more such devices. Furthermore, "at least one of (at least one of)..." means one or any combination of subsequent associated objects. For example, "at least one of A, B, and C" includes A, B, C, AB, AC, BC, or ABC. In the text descriptions of embodiments, the character "/" usually indicates an "or" relationship between associated objects. In a formula of embodiments, the character "/" indicates a "division" relationship between associated objects.

## Claims

1. A communication method, wherein the method comprises:
detecting, by a first host, transmission performance of a first transmission path between the first host and a second host; and
when the transmission performance of the first transmission path meets a preset condition, sending, by the first host, service data through the first transmission path and a second transmission path, wherein the first transmission path and the second transmission path are transmission paths that are between the first host and the second host and that are in networks of different standards; or
when the transmission performance of the first transmission path does not meet a preset condition, sending, by the first host, service data through the first transmission path.

2. The method according to claim 1, wherein the transmission performance of the first transmission path comprises one or more of a transmission delay, a packet loss rate, and a received signal strength indicator RSSI that are of the first transmission path.

3. The method according to claim 2, wherein the preset condition comprises:
one or more of the following: the transmission delay of the first transmission path is greater than a first delay threshold, a difference between the transmission delay of the first transmission path and a minimum transmission delay of the first transmission path within a preset time period is greater than a second delay threshold, or the transmission delay of the first transmission path tends to deteriorate.

4. The method according to claim 3, wherein that the transmission delay of the first transmission path tends to deteriorate comprises: a change gradient of the transmission delay of the first transmission path in n consecutive detection periods is a positive gradient, wherein n is a positive integer; and/or
that the transmission delay of the first transmission path tends to deteriorate comprises: the change gradient of the transmission delay of the first transmission path in the n consecutive detection periods is the positive gradient, and the change gradient of the transmission delay of the first transmission path in the n consecutive detection periods is greater than a gradient threshold.

5. The method according to any one of claims 2 to 4, wherein the preset condition comprises:
one or more of the following: the RSSI of the first transmission path is less than a first signal strength threshold, a difference between the RSSI of the first transmission path and a minimum RSSI of the first transmission path within a preset time period is greater than a second signal strength threshold, or the RSSI of the first transmission path tends to deteriorate.

6. The method according to claim 5, wherein that the RSSI of the first transmission path tends to deteriorate comprises: a change gradient of the RSSI of the first transmission path in k consecutive detection periods is a positive gradient, wherein k is a positive integer; and/or
that the RSSI of the first transmission path tends to deteriorate comprises: the change gradient of the RSSI of the first transmission path in the k consecutive detection periods is the positive gradient, and the change gradient of the RSSI of the first transmission path in the k consecutive detection periods is greater than a gradient threshold.

7. The method according to any one of claims 2 to 6, wherein the preset condition comprises: the packet loss rate of the first transmission path is greater than a packet loss rate threshold.

8. The method according to any one of claims 1 to 7, wherein sending, by the first host, the service data through the first transmission path and the second transmission path comprises:
sending, by the first host in a sequence of data packets in the service data, the data packets in the service data through the first transmission path; and
determining, by the first host based on a transmission delay difference between the first transmission path and the second transmission path, a data packet sent through the second transmission path.

9. The method according to claim 8, wherein determining, by the first host based on the transmission delay difference between the first transmission path and the second transmission path, the data packet sent through the second transmission path comprises:
when determining, based on the transmission delay difference between the first transmission path and the second transmission path, that the transmission delay of the first transmission path is less than a transmission delay of the second transmission path, calculating, by the first host, a quantity m of data packets sent through the first transmission path within a time period corresponding to the transmission delay difference; and
determining, by the first host based on the quantity m of data packets and a first data packet currently sent through the first transmission path, a second data packet sent through the second transmission path, wherein the second data packet is a data packet after m data packets of the first data packet.

10. The method according to claim 8 or 9, wherein determining, by the first host based on the transmission delay difference between the first transmission path and the second transmission path, the data packet sent through the second transmission path comprises:
when determining, based on the transmission delay difference between the first transmission path and the second transmission path, that the transmission delay of the first transmission path is less than the transmission delay of the second transmission path, calculating, by the first host, the quantity m of data packets sent through the first transmission path within the time period corresponding to the transmission delay difference; and
when the quantity m of data packets does not exceed a first threshold, determining, by the first host, that the second data packet sent through the second transmission path is the same as the first data packet currently sent through the first transmission path.

11. The method according to any one of claims 8 to 10, wherein determining, by the first host based on the transmission delay difference between the first transmission path and the second transmission path, the data packet sent through the second transmission path comprises:
when determining, based on the transmission delay difference between the first transmission path and the second transmission path, that the transmission delay of the first transmission path is less than the transmission delay of the second transmission path, calculating, by the first host, the quantity m of data packets sent through the first transmission path within the time period corresponding to the transmission delay difference; and
when the quantity m of data packets is greater than a second threshold, determining, by the first host, that the data packet sent through the second transmission path is a last data packet in a buffer of the first host.

12. The method according to any one of claims 1 to 11, wherein the method further comprises:
determining, by the first host according to a first preset policy, a first network corresponding to the first transmission path from a plurality of networks accessed by the first host, wherein the first preset policy comprises determining, based on network quality and/or network types of the plurality of networks accessed by the first host, the first network corresponding to the first transmission path.

13. The method according to claim 12, wherein the first preset policy specifically comprises: when it is determined, based on the network types of the plurality of networks accessed by the first host, that the plurality of networks accessed by the first host comprise a wireless fidelity Wi-Fi network and a cellular network, determining that the Wi-Fi network is the first network corresponding to the first transmission path.

14. The method according to claim 12 or 13, wherein the method further comprises: determining, by the first host according to a second preset policy, a second network corresponding to the second transmission path from the plurality of networks accessed by the first host, wherein the second preset policy comprises: determining, based on the network quality and/or the network types of the plurality of networks accessed by the first host, the second network corresponding to the second transmission path from a network other than the first network.

15. A communication method, wherein the method comprises:
sending, by a first host in a sequence of data packets in service data, the data packets in the service data through a first transmission path; and
determining, by the first host based on a transmission delay difference between the first transmission path and a second transmission path, a data packet sent through the second transmission path, wherein the first transmission path and the second transmission path are transmission paths that are between the first host and the second host and that are in networks of different standards.

16. The method according to claim 15, wherein determining, by the first host based on the transmission delay difference between the first transmission path and the second transmission path, the data packet sent through the second transmission path comprises:
when determining, based on the transmission delay difference between the first transmission path and the second transmission path, that a transmission delay of the first transmission path is less than a transmission delay of the second transmission path, calculating, by the first host, a quantity m of data packets sent through the first transmission path within a time period corresponding to the transmission delay difference; and
determining, by the first host based on the quantity m of data packets and a first data packet currently sent through the first transmission path, a second data packet sent through the second transmission path, wherein the second data packet is a data packet after m data packets of the first data packet.

17. The method according to claim 15 or 16, wherein determining, by the first host based on the transmission delay difference between the first transmission path and the second transmission path, the data packet sent through the second transmission path comprises:
when determining, based on the transmission delay difference between the first transmission path and the second transmission path, that the transmission delay of the first transmission path is less than the transmission delay of the second transmission path, calculating, by the first host, the quantity m of data packets sent through the first transmission path within the time period corresponding to the transmission delay difference; and
when the quantity m of data packets does not exceed a first threshold, determining, by the first host, that the second data packet sent through the second transmission path is the same as the first data packet currently sent through the first transmission path.

18. The method according to any one of claims 15 to 17, wherein determining, by the first host based on the transmission delay difference between the first transmission path and the second transmission path, the data packet sent through the second transmission path comprises:
when determining, based on the transmission delay difference between the first transmission path and the second transmission path, that the transmission delay of the first transmission path is less than the transmission delay of the second transmission path, calculating, by the first host, the quantity m of data packets sent through the first transmission path within the time period corresponding to the transmission delay difference; and
when the quantity m of data packets is greater than a second threshold, determining, by the first host, that the data packet sent through the second transmission path is a last data packet in a buffer of the first host.

19. A communication apparatus, wherein the communication apparatus is used in a first host, and the communication apparatus comprises a detection unit and a communication unit;
the detection unit is configured to detect transmission performance of a first transmission path between the first host and a second host; and
when the transmission performance of the first transmission path meets a preset condition, the communication unit is configured to send service data through the first transmission path and a second transmission path, wherein the first transmission path and the second transmission path are transmission paths that are between the first host and the second host and that are in networks of different standards; or
when the transmission performance of the first transmission path does not meet a preset condition, the communication unit is configured to send service data through the first transmission path.

20. The communication apparatus according to claim 19, wherein the transmission performance of the first transmission path comprises one or more of a transmission delay, a packet loss rate, and a received signal strength indicator RSSI that are of the first transmission path.

21. The communication apparatus according to claim 20, wherein the preset condition comprises:
one or more of the following: the transmission delay of the first transmission path is greater than a first delay threshold, a difference between the transmission delay of the first transmission path and a minimum transmission delay of the first transmission path within a preset time period is greater than a second delay threshold, or the transmission delay of the first transmission path tends to deteriorate.

22. The communication apparatus according to claim 21, wherein that the transmission delay of the first transmission path tends to deteriorate comprises: a change gradient of the transmission delay of the first transmission path in n consecutive detection periods is a positive gradient, wherein n is a positive integer; and/or
that the transmission delay of the first transmission path tends to deteriorate comprises: the change gradient of the transmission delay of the first transmission path in the n consecutive detection periods is the positive gradient, and the change gradient of the transmission delay of the first transmission path in the n consecutive detection periods is greater than a gradient threshold.

23. The communication apparatus according to any one of claims 20 to 22, wherein the preset condition comprises:
one or more of the following: the RSSI of the first transmission path is less than a first signal strength threshold, a difference between the RSSI of the first transmission path and a minimum RSSI of the first transmission path within a preset time period is greater than a second signal strength threshold, or the RSSI of the first transmission path tends to deteriorate.

24. The communication apparatus according to claim 23, wherein that the RSSI of the first transmission path tends to deteriorate comprises: a change gradient of the RSSI of the first transmission path in k consecutive detection periods is a positive gradient, wherein k is a positive integer; and/or
that the RSSI of the first transmission path tends to deteriorate comprises: the change gradient of the RSSI of the first transmission path in the k consecutive detection periods is the positive gradient, and the change gradient of the RSSI of the first transmission path in the k consecutive detection periods is greater than a gradient threshold.

25. The communication apparatus according to any one of claims 20 to 24, wherein the preset condition comprises: the packet loss rate of the first transmission path is greater than a packet loss rate threshold.

26. The communication apparatus according to any one of claims 19 to 25, wherein that the communication unit is configured to send the service data through the first transmission path and the second transmission path comprises:
the communication unit is specifically configured to send, in a sequence of data packets in the service data, the data packets in the service data through the first transmission path; and
the communication unit is specifically configured to determine, by the first host based on a transmission delay difference between the first transmission path and the second transmission path, a data packet sent through the second transmission path.

27. The communication apparatus according to claim 26, wherein that the communication unit is specifically configured to determine, based on the transmission delay difference between the first transmission path and the second transmission path, the data packet sent through the second transmission path comprises:
the communication unit is specifically configured to: when determining, based on the transmission delay difference between the first transmission path and the second transmission path, that the transmission delay of the first transmission path is less than a transmission delay of the second transmission path, calculate a quantity m of data packets sent through the first transmission path within a time period corresponding to the transmission delay difference; and
the communication unit is specifically configured to determine, based on the quantity m of data packets and a first data packet currently sent through the first transmission path, a second data packet sent through the second transmission path, wherein the second data packet is a data packet after m data packets of the first data packet.

28. The communication apparatus according to claim 26 or 27, wherein that the communication unit is specifically configured to determine, based on the transmission delay difference between the first transmission path and the second transmission path, the data packet sent through the second transmission path comprises:
the communication unit is specifically configured to: when determining, based on the transmission delay difference between the first transmission path and the second transmission path, that the transmission delay of the first transmission path is less than the transmission delay of the second transmission path, calculate the quantity m of data packets sent through the first transmission path within the time period corresponding to the transmission delay difference; and
the communication unit is specifically configured to: when the quantity m of data packets does not exceed a first threshold, determine that the second data packet sent through the second transmission path is the same as the first data packet currently sent through the first transmission path.

29. The communication apparatus according to any one of claims 26 to 28, wherein that the communication unit is specifically configured to determine, based on the transmission delay difference between the first transmission path and the second transmission path, the data packet sent through the second transmission path comprises:
the communication unit is specifically configured to: when determining, based on the transmission delay difference between the first transmission path and the second transmission path, that the transmission delay of the first transmission path is less than the transmission delay of the second transmission path, calculate the quantity m of data packets sent through the first transmission path within the time period corresponding to the transmission delay difference; and
the communication unit is specifically configured to: when the quantity m of data packets is greater than a second threshold, determine that the data packet sent through the second transmission path is a last data packet in a buffer of the first host.

30. The communication apparatus according to any one of claims 19 to 29, wherein the communication apparatus further comprises:
a determining unit, configured to determine, according to a first preset policy, a first network corresponding to the first transmission path from a plurality of networks accessed by the first host, wherein the first preset policy comprises determining, based on network quality and/or network types of the plurality of networks accessed by the first host, the first network corresponding to the first transmission path.

31. The communication apparatus according to claim 30, wherein the first preset policy specifically comprises: when it is determined, based on the network types of the plurality of networks accessed by the first host, that the plurality of networks accessed by the first host comprise a wireless fidelity Wi-Fi network and a cellular network, determining that the Wi-Fi network is the first network corresponding to the first transmission path.

32. The communication apparatus according to claim 30 or 31, wherein the determining unit is further configured to determine, according to a second preset policy, a second network corresponding to the second transmission path from the plurality of networks accessed by the first host, wherein the second preset policy comprises: determining, based on the network quality and/or the network types of the plurality of networks accessed by the first host, the second network corresponding to the second transmission path from a network other than the first network.

33. A communication apparatus, wherein the communication apparatus is used in a first host, and the communication apparatus comprises a first sending unit and a second sending unit;
the first sending unit is configured to send, in a sequence of data packets in service data, the data packets in the service data through a first transmission path; and
the second sending unit is configured to determine, based on a transmission delay difference between the first transmission path and a second transmission path, a data packet sent through the second transmission path, wherein the first transmission path and the second transmission path are transmission paths that are between the first host and the second host and that are in networks of different standards.

34. The communication apparatus according to claim 33, wherein that the second sending unit is configured to determine, based on the transmission delay difference between the first transmission path and the second transmission path, the data packet sent through the second transmission path comprises:
the second sending unit is specifically configured to: when determining, based on the transmission delay difference between the first transmission path and the second transmission path, that a transmission delay of the first transmission path is less than a transmission delay of the second transmission path, calculate a quantity m of data packets sent through the first transmission path within a time period corresponding to the transmission delay difference; and
the second sending unit is specifically configured to determine, based on the quantity m of data packets and a first data packet currently sent through the first transmission path, a second data packet sent through the second transmission path, wherein the second data packet is a data packet after m data packets of the first data packet.

35. The communication apparatus according to claim 33 or 34, wherein that the second sending unit is configured to determine, based on the transmission delay difference between the first transmission path and the second transmission path, the data packet sent through the second transmission path comprises:
the second sending unit is specifically configured to: when determining, based on the transmission delay difference between the first transmission path and the second transmission path, that the transmission delay of the first transmission path is less than the transmission delay of the second transmission path, calculate the quantity m of data packets sent through the first transmission path within the time period corresponding to the transmission delay difference; and
the second sending unit is specifically configured to: when the quantity m of data packets does not exceed a first threshold, determine that the second data packet sent through the second transmission path is the same as the first data packet currently sent through the first transmission path.

36. The communication apparatus according to any one of claims 33 to 35, wherein that the second sending unit is configured to determine, based on the transmission delay difference between the first transmission path and the second transmission path, the data packet sent through the second transmission path comprises:
the second sending unit is specifically configured to: when determining, based on the transmission delay difference between the first transmission path and the second transmission path, that the transmission delay of the first transmission path is less than the transmission delay of the second transmission path, calculate the quantity m of data packets sent through the first transmission path within the time period corresponding to the transmission delay difference; and
the second sending unit is specifically configured to: when the quantity m of data packets is greater than a second threshold, determine that the data packet sent through the second transmission path is a last data packet in a buffer of the first host.

37. A communication apparatus, comprising a memory and a processor, wherein the memory is configured to store computer instructions, and the processor is configured to invoke and run the computer instructions from the memory, to implement the method according to any one of claims 1 to 14, or implement the method according to any one of claims 15 to 18.

38. A computer-readable storage medium, wherein the computer-readable storage medium stores instructions, and when the instructions are run on a processor, the method according to any one of claims 1 to 14 or the method according to any one of claims 15 to 18 is implemented.

39. A computer program product, wherein the computer program product comprises instructions, and when the instructions are run on a processor, the method according to any one of claims 1 to 14 or the method according to any one of claims 15 to 18 is implemented.
